# EUROPEAN PATENT APPLICATION

(11) **EP 4 451 203 A1**
(43) Date of publication of application: **23.10.2024**
(21) Application number: 21968262.2
(22) Date of filing: 13.12.2021
(51) Int. Cl.: G06Q 50/26, G06Q 50/10, H04W 4/021

(54) **INTERACTIVE SYSTEM**

(71) Applicant: Cesco Co., Ltd, Seoul 05288 (KR)
(72) Inventor: CHYUN, Chan Hyuk, Seoul 05288 (KR)
(74) Representative: Carpmaels & Ransford LLP
(86) International application number: PCT/KR2021/018876
(87) International publication number: WO 2023/113053

(57) **Abstract**

An interactive system according to an embodiment may comprise: at least one management device provided in a target space to collect environment information of the target space; and a control server analyzing the environment information to generate analysis information on an environment, and selecting at least one piece of service information matching the analysis information.

## Description

### TECHNICAL FIELD

The following embodiments relate to an interactive system.

### BACKGROUND ART

Recently, with the development of industries, environmental pollution has become severe due to numerous pollutants caused and discharged from various industrial facilities and transportation means. In addition, harmful insects have been actively breeding, which directly or indirectly harm human lives, due to environmental pollution. Accordingly, the demands for the management and improvement of the environment are growing.

To manage and improve the environment, it is important to collect environmental information and efficiently receive information to improve the environment. Here, the environmental information may include information on harmful insects, information on air quality, information on water quality, or information on hygiene. Meanwhile, typical sterilizing, deodorizing, or cleaning devices used to collect various pieces of environmental information only perform simple detection and operation through sensors, but related service information has not been provided to users. Since users are not able to directly check environmental information and action guidelines according to said environmental information, efficient environment management is practically impossible.

Therefore, to comprehensively manage the environment, a system for analyzing the information of a management device that collects environmental information. In addition, it is necessary to develop an interactive system that may determine service information including action guideline information or necessary product information for users, which matches analysis information, beyond simply analyzing information, and may efficiently provide this service information to the users.

In addition, various types of management devices have been developed to manage the environment of a target zone. For example, the demands for the management devices are increasing in various fields, such as pest control, air quality control, water quality control, or hygiene control, and various products have been developed accordingly. With the development of various management devices, the need for a system that enables the interaction between a management device, a user, and a serviceman to comprehensively manage and control management devices. For example, when an environmental change event occurs around a management device, an interactive environment management system is required, in response to this environmental change event, to operate the management device, provide a necessary service or a necessary action guideline to a user.

The above description is information the inventor(s) acquired during the course of conceiving the present disclosure, or already possessed at the time, and is not necessarily art publicly known before the present application was filed.

### DISCLOSURE OF THE INVENTION

### TECHNICAL GOALS

An embodiment provides an interactive system that collects environmental information through a management device and generates analysis information on the environment by analyzing the collected environmental information.

An embodiment provides an interactive system that selects and provides service information by using generated analysis information.

An embodiment provides an interactive system that analyzes the operation information of management devices and generates user's propensity information.

An embodiment provides an interactive system that provides user-customized information by using generated user's propensity information.

According to an embodiment, an interactive environment management system provides a management service required according to an environmental condition of a target zone.

According to an embodiment, an interactive environment management system evaluates an environmental condition of a target zone based on the environmental information of the target zone.

According to an embodiment, an interactive environment management system provides a response service suitable for a target zone in response to an environmental change around the target zone.

An embodiment provides an interactive environment management system that provides a response measure to a management device and a user in response to an environmental change event occurring around a target space.

An embodiment provides an interactive environment management system that quantifies and analyzes an impact of an occurring event on a target space.

An embodiment provides an interactive environment management system that grades each expected environmental change and its urgency and select a response measure having each grade as a factor.

### TECHNICAL SOLUTIONS

According to an embodiment, an interactive system includes at least one management device included in a target space and configured to collect environmental information of the target space; and a control server configured to generate analysis information on an environment by analyzing the environmental information and select at least one piece of service information matching the analysis information.

In an embodiment, the control server may divide the target space into one or more control areas and generate a position index by assigning a position weight according to the one or more control areas, in which the position weight is determined by including at least one of the use, area, and congestion of the one or more control areas and the size and position of an opening.

In an embodiment, the control server may further receive device information of the management device and may generate the analysis information by including a device index generated by indexing the device information, in which the device information may include at least one of the specification information, component information, consumable information, battery information, software version information, inspection information, sensor information, and memory information of the management device, and the control server may generate the device index by assigning a device weight determined by including at least any one of the use period, replacement history, and price of the management device.

In an embodiment, the control server may further receive user information of a user who uses the management device and generate the analysis information by including a user index generated by indexing the user information.

In an embodiment, the control server may standardize pieces of environmental information into one environmental index and may generate the analysis information by using the standardized environmental index, and the control server may further receive the position information, device information, and user information of the one or more management devices and may generate the analysis information by including a composite index generated by indexing the environment information, the position information, the device information, and the user information.

According to an embodiment, an interactive system includes at least one management device included in a target space and configured to manage an environment of the target space; and a control server configured to generate the propensity information of a user by analyzing operation information of the management device and select at least one piece of customized information according to the propensity information, in which the control server is configured to provide the customized information to the user or a manager, the operation information includes at least any one of the operation function, operating time, operating period, operation frequency, and operation pattern of the management device, and the control server is configured to collect the operation information of each function of the management device and generate a function interest index by using the operation information.

In an embodiment, the control server may group the management device into at least one field, may collect the device interest index of each field, and may generate a field interest index by assigning a device weight to the device interest index, and the control server may compare the field interest index of each field and may select more pieces of customized information as a field having a higher field interest index.

In an embodiment, the control server may group the management device into at least one field, may collect the device interest index of each field, and may generate a field interest index by assigning a device weight to the device interest index, and the control server may select information on a product corresponding to a field having the highest field interest index as the customized information.

In an embodiment, the control server may group the management device into at least one field, may collect the device interest index of each field, and may generate a field interest index by assigning a device weight to the device interest index, and the control server may set the field having the highest field interest index as a main field of interest and a field having the second-highest field interest index as a secondary field of interest and may select information on a product corresponding to the main field of interest or the secondary field of interest as the customized information.

In an embodiment, the control server may select information on a product having a function having the highest function interest index as the customized information, or the control server may set the function having the highest function interest index as a main function of interest and a function having the second-highest function interest index as a secondary function of interest and may select information on a product having the main function of interest or the secondary function of interest as the customized information.

According to an embodiment, an interactive management system includes a management device included in a target zone and configured to manage an environment of the target zone; a control server configured to collect information through the management device and select a management service required for the target zone based on the collected information; and a manager device configured to receive an operation instruction for the selected management service, in which the control server includes a data collector configured to collect information related to the environment of the target zone; an analyzer configured to analyze an environmental condition of the target zone through the collected information; a management unit configured to set a database on a management service and select a management service matching an analysis result of the analyzer; and a communicator configured to transmit information on the selected management service to the manager device.

In an embodiment, the analyzer may classify the collected information into a plurality of factors and may generate an analysis result on the environmental condition of the target zone through a combination of the classified factors, may generate an individual indicator by applying an individual weight to each factor, and may generate the analysis result by extracting some factors of the plurality of factors based on the individual indicator, and the management unit may define a management service corresponding to an individual indicator of each of the plurality of factors in a matrix and may select a matching management service from the matrix by combining individual indicators of the extracted factors.

In an embodiment, the analyzer may evaluate the environmental condition of the target zone as a quantified environmental index and may select the management service based on the environmental index, and the analyzer may divide a numerical range of the environmental index into a plurality of environmental grades according to the characteristics of the target zone and may determine an environmental grade of the target zone through the collected information.

In an embodiment, the analyzer may evaluate the environmental condition of the target zone as a quantified environmental index and may select the management service based on the environmental index, and the control server may collect geofence information by setting a regional range based on the target zone as a geofence and may select a management service for the target zone by reflecting the geofence information.

In an embodiment, the analyzer may evaluate the environmental condition of the target zone as a quantified environmental index and may select the management service based on the environmental index, and the analyzer, when the management service is performed on the target zone, may reevaluate an environmental index of the target zone through feedback according to a performance result.

According to an embodiment, an interactive environment management system includes at least one management device included in a target space and configured to manage the environment of the target space; and a control server configured to, when an event of an environmental change occurs around the target space, quantify and analyze an impact of the event on the target space and select a necessary response measure.

In an embodiment, the control server may generate at least one reference environmental index that serves as a basis for an environmental condition of the target space, may generate an expected environmental index of the target space according to the occurrence of the event, and may select the necessary response measure by comparing the at least one reference environmental index and the expected environmental index, the control server may generate at least two or more environmental grades having the at least one reference environmental index as a numerical boundary, the control server may generate an expected environmental index according to a time by using at least any one of the type, scale, and occurrence time of the event and a distance between an occurrence point of the event and the target space, the control server may divide the expected environmental index by each unit time and may assign an environmental grade by each unit time by determining the environmental grade corresponding to the expected environmental index by each unit time, and the control server may calculate a gradient of the expected environmental index by each unit time and determine an urgency by each unit time according to the size of the gradient.

In an embodiment, the urgency may be evaluated with a plurality of urgency levels, and the control server may assign an urgency level by each unit time, matching according to the size of the gradient by each unit time, and the control server, when selecting the necessary response measure, may select a response measure by each unit time by using the type of the event, an environmental grade by each unit time, and an urgency level by each unit time.

In an embodiment, the control server may include a database where a response measure according to a combination of the environmental grade and the urgency level in a matrix, in which the matrix is included by each type of the event.

In an embodiment, the control server may select a matching response measure from the matrix corresponding to the event according to a combination of the environmental grade by each unit time and the urgency level by each unit time, the control server, when the response measure is applied, may regenerate an expected environmental index according to a time after the response measure is applied by reflecting feedback according to the response measure, and the control server, by using the regenerated expected environmental index, may update the environmental grade by each unit time, the urgency level by each unit time, and the response measure by each unit time.

### EFFECTS OF THE INVENTION

According to an embodiment, an interactive system may collect environmental information through a management device and may generate analysis information on the environment by analyzing the collected environmental information.

According to an embodiment, an interactive system may select and provide service information by using generated analysis information.

According to an embodiment, an interactive system may analyze the operation information of management devices and may generate user's propensity information.

According to an embodiment, an interactive system may provide user-customized information by using generated user's propensity information.

According to an embodiment, an interactive environment management system may provide information on a management service required according to an environmental condition of a target zone to a manager.

According to an embodiment, an interactive environment management system may qualitatively evaluate an environmental condition of a target zone based on the environmental information of the target zone.

According to an embodiment, an interactive environment management system may provide a response service suitable for a target zone in response to an environmental change around the target zone.

According to an embodiment, an interactive environment management system may provide the most appropriate response measure to a management device and a user in response to an environmental change event occurring around a target space.

According to an embodiment, an interactive environment management system may quantify and analyze an impact of an occurring event on a target space.

According to an embodiment, an interactive environment management system may grade each expected environmental change and its urgency and may select a response measure having each grade as a factor.

### BRIEF DESCRIPTION OF DRAWINGS

The accompanying drawings illustrate preferred embodiments of the present invention and are provided together with the detailed description for better understanding of the technical idea of the present invention. Therefore, the present invention should not be construed as being limited to the embodiments set forth in the drawings.
FIG. 1 is a schematic installation diagram illustrating an interactive system according to an embodiment.
FIG. 2 is a schematic interaction diagram illustrating the interactive system according to an embodiment.
FIG. 3 is a block diagram illustrating a field and function of a management device, according to an embodiment.
FIG. 4 is a flowchart illustrating the generating of a composite index for managing an environment, according to an embodiment.
FIG. 5 is a flowchart illustrating an interactive environment management method according to an embodiment.
FIG. 6 is a schematic installation diagram illustrating an interactive system according to an embodiment.
FIG. 7 is a schematic interaction diagram illustrating the interactive system according to an embodiment.
FIG. 8 is a block diagram illustrating a field and function of a management device, according to an embodiment.
FIG. 9 is a flowchart illustrating the generating of an interest index, according to an embodiment.
FIG. 10 is a flowchart illustrating an interactive management method according to an embodiment.
FIG. 11 is a flowchart illustrating a propensity information analysis operation according to an embodiment.
FIG. 12 is a structural diagram illustrating an interactive environment management system according to an embodiment.
FIG. 13 is a block diagram illustrating the interactive environment management system according to an embodiment.
FIG. 14 is a structural diagram illustrating a control service according to an embodiment.
FIG. 15 is a block diagram illustrating an environmental field managed by a management device, according to an embodiment.
FIG. 16 is a flowchart of another interactive environment management system according to an embodiment.
FIG. 17 is a flowchart illustrating an environmental condition analysis operation according to an embodiment.
FIG. 18 is a graph illustrating a factor extraction method of an environmental condition analysis operation.
FIG. 19 is a diagram illustrating a grading method of an environmental condition analysis operation.
FIG. 20 is a flowchart illustrating a management service selection operation according to an embodiment.
FIG. 21 is a flowchart illustrating a management service information transmission operation according to an embodiment.
FIG. 22 is a schematic diagram illustrating the interactive environment management system according to an embodiment.
FIG. 23 is an interaction diagram illustrating the interactive environment management system according to an embodiment.
FIG. 24 is a block diagram illustrating a field of a management device, according to an embodiment.
FIG. 25 is a flowchart illustrating the generating of a reference environmental index and an environmental grade, according to an embodiment.
FIGS. 26 and 27 are graphs illustrating a reference environmental index and an environmental grade, according to an embodiment.
FIG. 28 is a flowchart illustrating a response measure selection process according to an embodiment.
FIGS. 29 and 30 are graphs illustrating an expected environmental index according to an embodiment.
FIG. 31 is a response measure matrix according to a combination of an environmental grade and an urgency level, according to an embodiment.
FIG. 32 is a graph illustrating the regenerating of the expected environmental index of FIG. 29 according to the application of a response measure.
FIG. 33 is a flowchart of the interactive environment management method according to an embodiment.
FIG. 34 is a flowchart illustrating an analysis operation according to an embodiment.

### BEST MODE FOR CARRYING OUT THE INVENTION

Hereinafter, embodiments will be described in detail with reference to the illustrative drawings. Regarding the reference numerals assigned to the components in the drawings, it should be noted that the same components will be designated by the same reference numerals, wherever possible, even though they are shown in different drawings. Further, in the following description of the present embodiments, a detailed description of publicly known configurations or functions incorporated herein will be omitted when it is determined that the detailed description obscures the subject matters of the present embodiments.

Also, in the description of the components, terms such as first, second, A, B, (a), (b) or the like may be used herein when describing components of the present disclosure. These terms are used only for the purpose of discriminating one constituent element from another constituent element, and the nature, the sequences, or the orders of the constituent elements are not limited by the terms. When one constituent element is described as being "connected", "coupled", or "attached" to another constituent element, it should be understood that one constituent element can be connected or attached directly to another constituent element, and an intervening constituent element can also be "connected", "coupled", or "attached" to the constituent elements.

A component, which has the same common function as a component included in any one embodiment, will be described by using the same name in other embodiments. Unless disclosed to the contrary, the configuration disclosed in any one embodiment may be applied to other embodiments, and the specific description of the repeated configuration will be omitted.

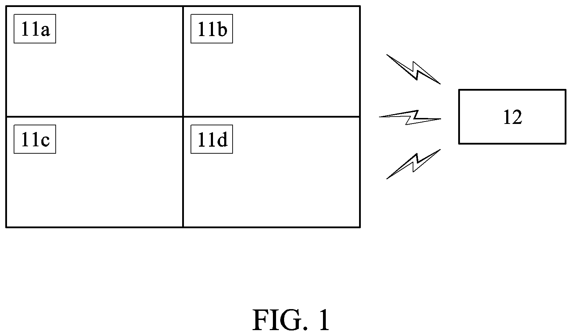

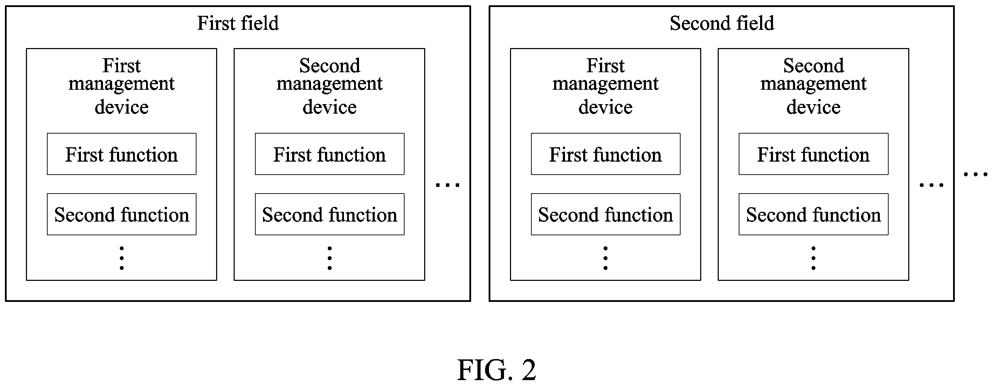

FIG. 1 is a schematic installation diagram illustrating an interactive system according to an embodiment. FIG. 2 is a schematic interaction diagram illustrating the interactive system according to an embodiment.

Referring to FIGS. 1 and 2, an interactive system 1, according to an embodiment, may include a management device 11 and a control server 12. The interactive system 1, according to an embodiment, may interact among the management device 11, the control server 12, and a user U. Alternatively, the interactive system 1, according to an embodiment, may interact among the management device 11, the control server 12, and a manager. Here, the manager may refer to a person who provides a service for the management device 11. The interactive system 1 may analyze environmental information, collected in the management device 11, in the control server 12, and the control server 12 may generate analysis information by analyzing the environmental information. In addition, the control server 12 may select service information that matches the analysis information and may provide this selected service information to the user U or the manager to provide customized feedback.

The management device 11 may be a device that is included in a target space and collects the environmental information of the target space. In addition, the management device 11 may be a device that manages the environment of the target space. The management device 11 may include at least one of a pest trap device, an air quality measurement device, an air quality management device, a water quality measurement device, a water quality management device, a hygiene measurement device, or a hygiene management device. For example, the management device 11 may include an air purifier, a dehumidifier, a pest control device, a sterilizer, a water purifier, a disinfector, a dispenser, or a bidet, but examples are not limited thereto.

At least one management device 11 may be provided. There may be a plurality of management devices 11. For example, each target space may include a first management device 11a, a second management device 11b, a third management device 11c, and a fourth management device 11d. When there is the plurality of management devices 11, pieces of environmental information may be collected.

The environmental information collected by the control device 11 may include at least one of pest control information, air quality information, water quality information, or hygiene information.

The pest control information may include the internal and external meteorological information of a pest trap device that traps pests and pest information detected in the pest trap device. For reference, the pests herein may collectively refer to insects or animals that are harmful to human beings and livestock. The internal and external meteorological information of the pest trap device may include at least one of the temperature, humidity, wind direction, weather, time, or advisories or warnings issued by a national meteorological agency in a zone including the pest trap device. The pest information detected in the pest trap device may include at least one of the type of pests, harmfulness information, behavior information according to season and time, entry and exit information, route information, weight information, or prey intake information.

The air quality information may include at least one of the internal and external meteorological information of a measurement device that measures air quality or the indices and components of atmospheric environment. The internal and external meteorological information of the measurement device may include at least one of the temperature, humidity, wind direction, weather, time, or advisories or warnings issued by the national meteorological agency in a zone including the measurement device. The air quality information may include an atmospheric environment index, including air pollution measurements on how polluted the air currently is or how the degree of pollution is going to change. In addition, the air quality information may include ingredient information on various volatile organic compounds (VOCs), such as formaldehyde, radon, toluene, benzene, or acetone, which is a carcinogenic substance generated from various indoor construction materials, pollutants, such as nitrogen dioxide generated from asbestos, or carbon dioxide generated in the ignition of gas used for cooking in kitchen or the respiration of a human body.

The water quality information may include at least one of the internal and external meteorological information of a water quality measurement device that measures water quality or the turbidity, chromaticity, carbonate hardness, total hardness, pH, odor, ingredient, dissolved oxygen amount, or conductivity of the water quality. The internal and external meteorological information of the water quality measurement device may include at least one of the temperature, humidity, wind direction, weather, time, or advisories or warnings issued by the national meteorological agency in a zone including the water quality measurement device. In addition, the ingredients may include total dissolved solids (TDS). The TDS may refer to minerals, salts, metals, cations, or anions dissolved in water. In addition, the measurement information of aesthetic impact materials, including chloride ions, KMnO4 consumption, total hardness, sulfate ions, evaporation residues, detergents, iron, copper, zinc, manganese, or aluminum, may also be included. Information on inorganic materials having harmful effects on health, including mercury, cyanide, arsenic, hexavalent chromium, cadmium, lead, fluorine, selenium, nitrate nitrogen, ammonia nitrogen, or boron, may also be included, or information on organic materials having harmful effects on health, including phenol, tri-halo methane (THM), diazinon, parathion, fenitrothion, carbanyl, residual chlorine, benzene, toluene, ethylbenzene, xylene, chloroform, dibromochloromethane, 1.1.1-trichloroethane, 1.2-dibromo-3-chloropropane, tetrachloroethylene, chloral hydrate, trichloroethylene, dibromoacetonitrile, dichloroacetonitrile, trichloroacetonitrile, dichloromethane, 1.1-dichloroethylene, carbon tetrachloride, haloacetic acid, bromodichloromethane, or 1.4-dioxane, may also be included. The water quality information may include flavor profile analysis (FPA) values.

The hygiene information may include at least one of the internal and external meteorological information of a hygiene measurement device that measures hygiene or the bacterial information of the inside and outside of the hygiene measurement device. The internal and external meteorological information of the hygiene measurement device may include at least one of the temperature, humidity, wind direction, weather, time, or advisories or warnings issued by the national meteorological agency in a zone including the hygiene measurement device. The bacterial information may include various pieces of information, which may be used to analyze the current state of bacteria, such as the type of bacteria detected in the hygiene measurement device, a degree of bacterial reproduction, or the number of bacteria.

The management device 11 may collect said environmental information by using a sensor. The sensor may be included on one side of the management device 11 or in the target space in which the management device 11 is included. When included in the target space, it is desirable that the sensor is included in a space where the most standardized environmental information may be collected in the target space. The sensor may include at least one of a temperature sensor, a humidity sensor, a sound sensor, a vibration sensor, an acceleration sensor, a level sensor, a pressure sensor, a wind pressure sensor, a gas sensor, an ion sensor, a light sensor, an infrared sensor, an ultraviolet sensor, an ultrasonic sensor, an electromagnetic sensor, or a magnetoresistance sensor. The sensor is not limited to the foregoing examples and may include various sensors that may collect environmental information.

In addition, the management device 11 may receive the environmental information as an input through input means. In this case, the environmental information directly input by the user U, not by using the sensor, may be received. The input means may include at least one of a keyboard, a mouse, or a trackpad. For example, when the management device 11 is a water purifier, including a keyboard in a touchpad form on one side of the water purifier, temperature or humidity information may be directly input by the user U.

Meanwhile, the management device 11 may also receive the environmental information by communicating with an external server. Here, the external server may include at least one of Korea Meteorological Administration, Air Korea, National Crop Pest Management System, National Ambient Monitoring Information System, National Center for Fine Dust Information, Water Environment Information System, or Water Resources Management Information System. When receiving the environmental information by communicating with the external server, a generalized, objective information may be received.

The management device 11 may also collect the information of the user U. The information of the user U may include age, gender, height, weight, or medical history. The information of a plurality of users U may be input. The management device 11 may receive the information of the user U by communicating with an external organization. In this case, the external organization may be a medical organization retaining the physical information and medical information of the user U. Meanwhile, the management device 11 may include a user recognizer including user recognition means on one side to receive the information of the user U. The user recognition means may include at least one of fingerprint, palm, iris, retina, face, voice, vein, height, weight, barcode, QR code, or RFID and NFC recognition.

In addition, the management device 11 may collect the position information of the target space. The position information may be information directly input by the user U who uses the management device 11 or information that receives an installed position through a GPS, for example.

The control server 12 may transmit and receive data to and from the management device 11. The control server 12 may transmit and receive data to and from the plurality of management devices 11. For example, the control server 12 may be installed in each unit zone. The control server 12 may include a data storage and a process for processing data.

The control server 12 may receive the environmental information from the management device 11. For example, the control server 12 may receive at least one of the pest control information, the air quality information, the water quality information, or the hygiene information, but examples are not limited thereto. The control server 12 may generate analysis information on the environment by analyzing the environmental information of the management device 11. The analysis information may refer to information on an environmental condition where the management device 11 is. For example, when the management device 11 is an air purifier, the information may be about whether the concentration of dust in a space including the air purifier exceeds preset reference dust concentration. In addition, when the management device 11 is a pest control device, the information may be about whether pests trapped in a space including the pest control device exceed a reference trap degree.

The control server 12 may receive and analyze the pieces of environmental information collected in the plurality of management devices 11. In this case, the control server 12 may standardize the pieces of environmental information collected in the plurality of management devices 11 into one index. For example, the control server 12 may receive the information on temperature and pest trapping respectively from the air purifier and the pest control device and may calculate the degree of pest trapping as the temperature exceeds a standard level as one index. The logic of standardizing the pieces of environmental information into one index is not limited to the foregoing example, various environmental indices may be generated by including the air quality information or the hygiene information.

Meanwhile, the control server 12 may receive operation information from the management device 11. The operation information may refer to information on an operation of the management device 11. For example, the operation information may include at least any one of the operation function, operating time, operating period, operation frequency, or operation pattern of the management device 11, but examples are not limited thereto. The control server 12 may generate the propensity information of the user U by analyzing the operation information of the management device 11. The propensity information may refer to information on which propensity the user U has. For example, the propensity information may include at least any one of an interest index by functions, an interest index by devices, an interest index by fields, or a composite interest index of the user U, but examples are not limited thereto.

The control server 12 may select at least one piece of service information that matches the analysis information obtained by analyzing the environmental information. The service information may include at least any one of the service and function of the management device 11 for managing the environment, the action guideline of the user U, the action guideline of the manager, or customized product information recommended for the manager, but examples are not limited thereto. Specifically, the service information on the service and function of the management device 11 may include, for example, an operation mode of the management device 11 necessary for improving the environment. In addition, the information on the inspection and replacement of the management device 11 may be included. The action guideline of the user U may be a guideline, such as whether to open or close a window or the need for replacing consumables, to improve air quality. The action guideline for the manager may be a guideline, which is a visit to the management device 11 is required since the inspection of the management device 11 is required. In addition, the customized product information may include information on a product, such as a deodorizer or an expellant, needed for the user U or the manager. The service information may further include various environment management guidelines, such as a management guideline for purifying air quality to be below an acceptable standard level, a management guideline for trapping pests, or a management guideline for purifying pollutants in the air, but examples are not limited to the foregoing examples.

The control server 12 may provide the service information to the user U through the management device 11. The control server 12 may provide the service information to the management device 11 such that the service information is displayed. When a notification is required, a notification or an alarm may be generated in the management device 11. In addition, the control server 12 may directly control an operation of the management device 11 according to the service information. For example, when determined service information is information that guides to enhance air purification in a space including the management device 11, the control server 12 may directly control an operation mode of the air purifier and may enhance air purification.

The control server 12 may directly provide the service information to the user U or the manager. In this case, the control server 12 may provide the service information through at least any one terminal of a terminal of the user U or a terminal of the manager. The terminal may refer to a device that allows data communication, such as a smartphone, a PC, a laptop, or a smartwatch. The control server 12 may provide the service information through an application, a messenger, a text, a call, a notification sound, or a display. In addition, the control server 12 may provide the service information to the manager and may transmit the service information to the user U through the manager.

Specifically, the control server 12 may further include the user information of the user U who uses the management device 11 and may communicate with a user's terminal that matches the information of the user U. Since the user information is included in advance in the management device 11, efficient communication with the user's terminal may be enabled by immediately matching the user U who uses the management device 11.

When the control server 12 communicates with the manager's terminal, the control server 12 may include the position information of the management device 11 and may communicate with the manager's terminal that is the closest to the position information of the management device 11 among the manager's terminals. The control server 12 may transmit the service information to a manager who is the closest to the management device 11 to provide an efficient route when the manager needs to move to manage the management device 11.

As described above, the control server 12 may provide the service information through the management device 11, the terminal of the user U, or the terminal of the manager and may receive an action result corresponding to the provided service information. Since two-way communication is possible, the satisfaction and convenience of the user U may be improved, and the management efficiency of the management device 11 may also be improved.

As such, the interactive system 1 may generate the analysis information by analyzing the environmental information collected by the management device 11 in the control server 12 and may select and provide the service information that matches the analysis information to provide the satisfaction and convenience to the user U or the manager who uses the management device 11. Hereinafter, the generating of the analysis information and the selection of the service information through the control server 12 are described in detail.

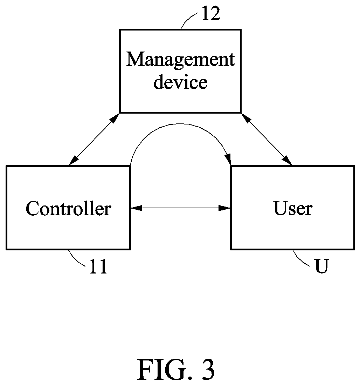

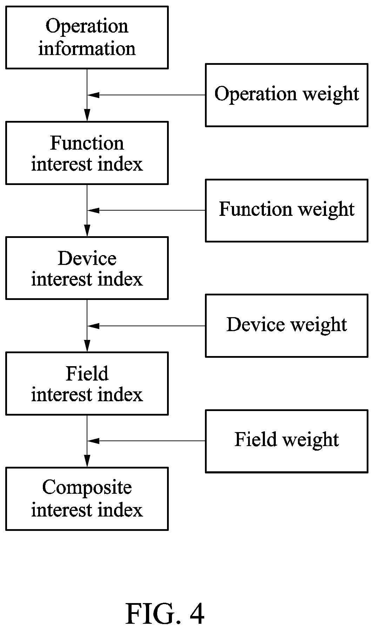

FIG. 3 is a block diagram illustrating a field and function of a management device, according to an embodiment, and FIG. 4 is a flowchart illustrating the generating of a composite index for managing an environment, according to an embodiment.

Referring to FIGS. 3 and 4, the control server 12 may collect environmental information by each function of the management device 11. For example, one management device 11 may include a plurality of functions. The control server 12 may receive the environmental information by each function of the management device 11. For example, one management device 11 may simultaneously receive air quality information and pest control information, and the environmental information received from the plurality of functions is not limited thereto. The management device 11 may further receive the operation information of a device by each function. For example, at least any one of the operating time, operating period, operation frequency, and operation pattern of the management device 11 may be further received.

The control server 12 may group the management devices 11 into at least one field. For example, the control server 12 may perform grouping into at least one of a pest field, an air quality field, a water quality field, and a hygiene field according to the purpose or effect of the management device 11. One management device 11 may be grouped into two or more fields. The grouping may be predetermined. The control server 12 may receive the environmental information of the management device 11 corresponding to each field. The control server 12 may determine for which field the importance of environment management is high by grouping the management device 11. Here, more service information may be selected and provided for a field of higher importance. In addition, service information may be provided more frequently.

The control server 12 may generate analysis information by indexing the environmental information. That is, the analysis information may include at least any one of a pest control index, an air quality index, a water quality index, and a hygiene index, generated by indexing the environmental information. For example, a low air quality index may be generated when air quality is good, and a high air quality index may be generated when the air quality is bad. In addition, a low pest control index may be generated when a pest trapping degree is low, and a high pest control index may be generated when the pest trapping degree is high.

As such, the control server 12 may index the environmental information by using an environmental weight according to the environmental information collected in the management device 11. The environmental weight may be differently applied depending on a field of an environment including the management device 11, a standard level representing the environment, or the like. In addition, the environmental weight may be differently applied to each management device 11. For example, regarding information on pest control, a low weight may be applied to the management device 11 whose main purpose is in the water quality field. Accordingly, when the pest control index, the air quality index, the water quality index, or the hygiene index is high, the control server 12 may generate the analysis information indicating the need for a high level of management of the environment. In addition, when the control server 12 receives pieces of environmental information from the plurality of management devices 11, one standardized environmental index may be generated by synthesizing the pest control index, the air quality index, the water quality index, and the hygiene index. When generating the standardized environmental index, the process of generating one environmental index by generating a matrix corresponding to a plurality of indices may be included.

The control server 12 may further receive the position information of the management device 11, may include a position index generated by indexing the position information, and may generate the analysis information. As described above, the position information may be information directly input by the user U who uses the management device 11 or information that directly receives a position where the management device 11 is installed through a GPS or the like.

The control server 12 may divide a target space into one or more control areas and may generate the position index by assigning a position weight according to the one or more control areas. For example, when the target space including the management device 11 is a home, the control server 12 may divide the target space into control areas, including a living room, a room, a kitchen, or a bathroom. In addition, since the kitchen where various foods are prepared requires the management of air purification more frequently, the position index may be generated by assigning a high weight.

The position weight used by the control server 12 to generate the position index may be determined by including at least one of the use, area, and congestion of the control areas and the size and position of an opening. Meanwhile, the control server 12 may determine the position weight by including information on whether there is a mountain or a river or a facility, like a factory or a hospital, around the target space including the management device 11 and how close it is. By differently evaluating the necessity or importance of environment management according to such information, a high weight may be assigned when the need for management is high. Meanwhile, when the plurality of management devices 11 are provided, the control server 12 may standardize the position index by taking an average as many as the number of the plurality of management devices 11.

The control server 12 may further receive the device information of the management device 11 and may generate the analysis information by including a device index generated by indexing the device information. Here, the device information may include at least one of the specification information, component information, consumable information, battery information, software version information, inspection information, sensor information, and memory information of the management device 11, but examples are not limited thereto.

The control server 12 may generate the device index by including a device weight. The device weight may be applied by including at least any one of the use period, replacement history, and price of the management device 11 together with the device information. In addition, the device weight may be assigned depending on the operating time, operation frequency, and operation pattern of the management device 11. For example, as the use time and operation frequency of the management device 11 increases, the importance of the management device 11 may be determined to be high, and thus, a high device weight may be assigned. In addition, when there is history indicating the user U has frequently replaced consumables of the management device 11, the importance of management is determined to be high, and thus, a high device weight may be assigned. Meanwhile, when the plurality of management devices 11 are provided, the control server 12 may standardize the device index by taking an average as many as the number of the plurality of management devices 11.

The control server 12 may further receive the user information of the user U who uses the management device 11 and may generate the analysis information by including a user index generated by indexing the user information. Since the user information is described above, the description is not repeated.

The control server 12 may generate the user index by assigning a user weight depending on the user U. For example, when the user U is an infant, the importance of environment management is evaluated to be high, and thus, a high user weight may be assigned when the user U uses the management device 11. In addition, since the importance of management is high for the user U whose health condition is relatively not well or who suffers from a disease, a high user weight may be assigned.

When the management device 11 includes pieces of user information, the control server 12 may generate pieces of information of the users U respectively for the number of users U. For example, when the pieces of personal information of two users U are input to the management device 11, the environmental information transmitted through the management device 11 may be classified into two groups, and the analysis information may be generated for each user U. To classify the analysis information on each user U, the control server 12 may use machine learning. When determining that a specific user U is using the management device 11, the control server 12 may provide service information by using the analysis information on the specific user U.

As such, the control server 12 may receive at least one of the environmental information, the position information, the device information, or the user information and may generate the analysis information by assigning a weight and performing indexing. In addition, the analysis information may be generated by integrating indices into one index and the service information may be selected accordingly.

Likewise, when the plurality of management devices 11 are provided, the position information, device information, or user information of the plurality of management devices 11 may be received, and a weight may be assigned to each information for indexing. In this case, each information may be indexed to generate a composite index, and the analysis information may be generated according to the composite index. For example, even when the position index is the same, the composite index may be generated as an index to which a high weight is assigned by determining that environment management is more needed for the user U who suffers from a disease.

When the composite index and an environment management index preset for the management device 11 are different, the control server 12 may control the operation of the management device 11. In this case, the control server 12 may control the management device 11 based on the service information selected according to the analysis information. Accordingly, the control server 12 may automatically manage the environment by directly communicating with the management device 11 without providing the service information to the user U or the manager.

The control server 12 may determine the frequency of providing the service information to the user U or the manager according to the composite index. A high composite index may refer to a high need for environment management of the target space or the high interest of the user U in environment management of the target space. Accordingly, as the composite index is higher, by setting the frequency of providing the service information higher, the need for environment management of the target space may be satisfied. On the contrary, a low composite index may refer to a low need for environment management of the target space or the low interest of the user U in environment management of the target space. Accordingly, when the composite index is low, the frequency of providing the service information may be set low. The control server 12 may generate a composite index grade by grading the composite index by each section. In this case, the control server 12 may determine the frequency of providing the service information, corresponding to the composite index grade.

Meanwhile, the control server 12, according to another embodiment, may further receive an interest index of the user U by each management device 11 and may provide the service information. The interest index of the user U may be an index indicating how interested the user U is in the management device 11. The interest index may be generated by each function of the management device 11. For example, the control server 11 may determine that the interest index is higher as an operating period of a function of the management device 11 is longer. In addition, the interest index may also be an index indicating how interested the user U is in the target space including the management device 11.

The control server 12 may provide the service information to the user U in a specific pattern based on the interest index of the user U. For example, when the user U is using a specific function or the management device 11, the service information on the specific function or the management device 11 may be provided. In addition, the service information may be provided in a time when the user U mainly uses the management device 11. The control server 11 may adjust a pattern of providing the service information by adjusting the time or frequency of exposing the service information to the user U in proportion to the interest index. For example, the time for which the service information provided to the user U may be set relatively long for the service information with a relatively high interest index, and the time for which the service information provided to the user U may be set relatively short for the service information with a relatively low interest index. As such, appropriate service information may be provided to the user U at an appropriate time by generating the analysis information by using the interest index of the user U and providing the service information.

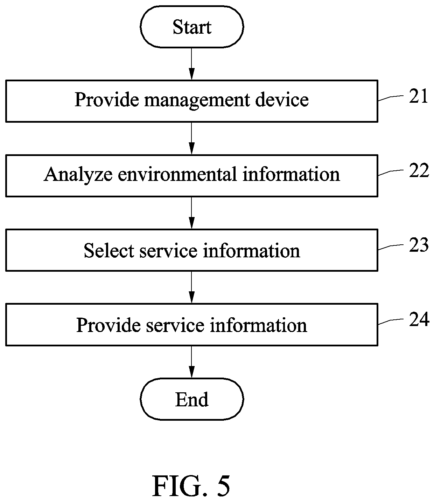

Hereinafter, an interactive environment management method is described. However, when describing the interactive environment management method, the detailed description is omitted regarding the overlapping description of the interactive system provided above. For reference, FIG. 5 is a flowchart illustrating an interactive environment management method according to an embodiment.

Referring to FIG. 5, the interactive environment management method according to an embodiment may be a method of interacting among a management device, a control server, and a user. In the interactive environment management method, environmental information, collected in the management device, may be received by the control server, and the control server may generate analysis information on the environmental information by analyzing the environmental information. The control server may select service information by using the analysis information and may provide this service information to the user or a manager to provide customized feedback.

The interactive environment management method according to an embodiment may include management device provision operation 21, environmental information analysis operation 22, service information selection operation 23, and service information provision operation 22.

The management device provision operation 21 may be an operation of providing at least one management device that is included in a target space and collects the environment of the target space. Environmental information, user information, or position information may be input to the management device. The control server may transmit and receive data to and from the management device. The management device may transmit the environmental information to the control server. The management device may transmit the user information or the position information to the control server. The control server may be installed in each unit section to transmit and receive data to and from at least one management device. The control server may include a data storage and a process for processing data.

The environmental information analysis operation 22 may be an operation of receiving the environmental information of the management device in the control server and generating analysis information by analyzing the environmental information. The environmental information may include at least one of pest control information, air quality information, water quality information, or hygiene information, but examples are not limited thereto. The control server may generate the analysis information by analyzing the environmental information of the management device. The analysis information may refer to information on an environmental condition where the management device is. The analysis operation 22 is described in detail below.

The analysis operation 22 may be an operation of the control server generating the analysis information by indexing the environmental information received by the management device. That is, the operation may be an operation of the control server generating the analysis information, including at least any one of a pest control index, an air quality index, a water quality index, and a hygiene index, generated by indexing the environmental information. The control server may index the environmental information by using an environmental weight according to the environmental information collected in the management device. The environmental weight may be differently applied depending on a field of an environment including the management device, a standard level representing the environment, or the like.

In addition, the analysis operation 22 may be an operation of generating one standardized environmental index by including an operation of generating a matrix that synthesizes the pest control index, the air quality index, the water quality index, and the hygiene index. In addition, when a plurality of management devices is provided, the analysis operation 22 may include an operation of receiving pieces of environmental information from the plurality of management devices and standardizing the pieces of environmental information into one environmental index. The control server may generate the analysis information by using the standardized environmental information.

The analysis operation 22 may be an operation of the control server receiving the position information of the management device and generating the analysis information by including a position index generated by indexing the position information. The control server may divide the target space into one or more control areas and may generate the position index by assigning a position weight according to the one or more control areas. The position weight may be determined by including at least one of the use, area, and congestion of the one or more control areas and the size and position of an opening. For the plurality of management devices, the control server may generate the analysis information by standardizing the position index by taking an average as many as the number of the plurality of management devices.

The analysis operation 22 may be an operation of the control server receiving the device information of the management device and generating the analysis information by including a device index generated by indexing the device information. The control server may generate the device index by including a device weight. The device weight may be applied by including at least any one of the use period, replacement history, price, operating time, operation frequency, and operation pattern of the management device together with the device information. For the plurality of management devices, the control server may generate the analysis information by standardizing the device index by taking an average as many as the number of the plurality of management devices.

The analysis operation 22 may be an operation of the control server receiving the user information of the user who uses the management device and generating the analysis information by including a user index generated by indexing the user information. The control server may generate the user index by assigning a user weight depending on the user. When the management device includes pieces of user information, the control server may generate pieces of user information respectively for the number of users.

The analysis operation 22 may be an operation of the control server further receiving the position information, the device information, and the user information from the plurality of management devices, as described above, and generating the analysis information by including a composite index generated by indexing each information.

The service information selection operation 23 may be an operation of the control server selecting at least one piece of service information that matches the analysis information. The control server may select the service information based on the analysis information generated by using, for example, at least any one of the environmental information, the position index, the device index, the user index, or the composite index, as described above. The control server may select more appropriate service information by further including the user's interest index.

The selection operation 23 may be an operation of selecting the service and function of the management device to manage the environment based on the analysis information. The control server may select the service information including the operation mode and function of the management device to improve the environment. The control server may select the service information to inspect or replace the management device.

The selection operation 23 may be an operation of selecting an action guideline for the user or the manager, based on the analysis information. The control server may select the service information including an action guideline for the user or the manager to operate, inspect, or replace the management device. In addition, the service information including a guideline under which the user or the manager needs to act to improve the environment, independently of the management device, may be selected.

The selection operation 23 may be an operation of customized product information recommended to the user or the manager, based on the analysis information. The control server may select the service information including information on a product for inspecting or replacing the management device, information on consumables included in the management device, product information for replacing the consumables, and information on a product required to improve the environment.

The service information provision operation 24 may be an operation of providing the service information to at least any one of the management device, the user who uses the management device, and the manager who manages the management device after the service information selection operation 23.

The provision operation 24 may include an operation of providing the service information to the user through the management device. The control server may provide the service information to the management device such that the service information is displayed. The control server may provide the service information while generating a notification or an alarm to the management device when the notification is necessary. In this case, an operation of the control server controlling the operation of the management device according to the service information may be further included. The control server may directly control the operation of the management device according to the service information provided to the management device.

The provision operation 24 may include an operation of communicating with an external terminal such that the service information may be provided through at least any one of the user's terminal or the manager's terminal. The control server may communicate with any one of the user's terminal or the manager's terminal. The terminal may refer to a device that allows data communication, such as a smartphone, a PC, a laptop, or a smartwatch. The control server may provide the service information to the user's terminal or the manager's terminal through an application, a messenger, a text, a call, a notification sound, or a display. In addition, an operation of the control server including the position information of the management device and communicating with the manager's terminal that is the closest to the position information of the management device among the manager's terminals may also be included.

The provision operation 24 may be an operation of providing the service information selected by the control server in a specific pattern. For example, an operation of the control server determining the frequency of providing the service information to the user according to the composite index may be included. The control server may generate a composite index grade by grading the composite index by each section. The control server may determine the frequency of providing the service information, corresponding to the composite index grade.

In addition, an operation of providing the service information selected by the control server in a specific pattern to the user may be included. The control server may provide the service information with a high interest index of the user at a time when the user mainly uses the management device. The control server may adjust a pattern of providing the service information by adjusting the time or frequency of exposing the service information to the user in proportion to the interest index. In addition, when the user is using a specific function or the management device, the service information on the specific function or the management device may be provided.

Meanwhile, the interactive environment management method may further include a result receiving operation of receiving an action result of the management device, the user, or the manager in response to the service information provided by the control server after the provision operation 24. The control server may receive the current state of an operation mode of the management device that responds to the service information. The control server may receive the action result of the user or the manager who responds to the service information. In this case, the control server may receive the action result through the user's terminal or the manager's terminal.

The management device that collects the environmental information of the target space, the interactive system that generates the analysis information on the environment by analyzing the environmental information and selects the service information that matches the analysis information, and the interactive environment management method using the same are described above. Through the interactive system and the interactive environment management method, the analysis information on the environment may be generated by analyzing the environmental information of management devices. In addition, by using the generated analysis information, customized service information may be provided to the management device, the user, or the manager. Accordingly, this may improve the satisfaction of the user or the manager for the management device and may provide convenience in environment management.

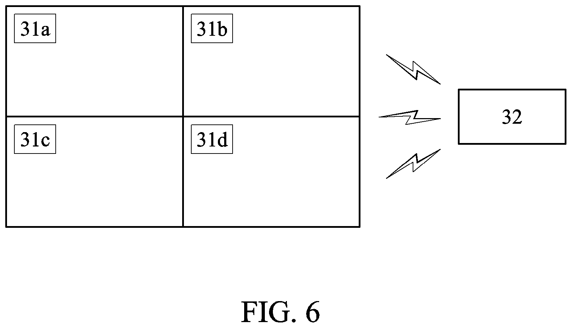

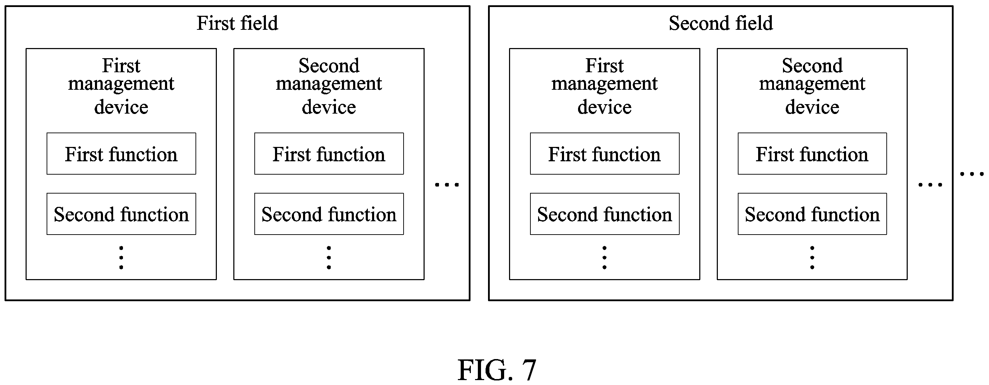

FIG. 6 is a schematic installation diagram illustrating an interactive system according to an embodiment. FIG. 7 is a schematic interaction diagram illustrating the interactive system according to an embodiment.

Referring to FIGS. 6 and 7, an interactive system 3, according to an embodiment, may include a management device 31 and a control server 32. The interactive system 3, according to an embodiment, may interact among the management device 31, the control server 32, and the user U. Alternatively, the interactive system 3, according to an embodiment, may interact among the management device 31, the control server 32, and a manager. The interactive system 3 may collect the operation information of the management device 31, in the control server 32, and the control server 32 may generate the propensity information of the user U by analyzing the operation information. The control server 32 may select customized information by using the propensity information and may provide this customized information to the user U or the manager to provide customized feedback. Here, the manager may refer to a person who provides a service for the management device 31.

The management device 31 may be a device that is included in a target space and manages the environment of the target space. For example, the management device 31 may include an air purifier, a dehumidifier, a pest control device, a sterilizer, a water purifier, a disinfector, a dispenser, or a bidet, but examples are not limited thereto. At least one management device 31 may be provided. For example, each target space may include a first management device 31a, a second management device 31b, a third management device 31c, and a fourth management device 31d. The personal information of the user U may be input to the management device 31. The personal information of the user U may include age, gender, height, weight, or medical history. The pieces of personal information of a plurality of users U may be input. The position information of the target space may be input to the management device 31. For example, the management device 31 may receive its installed position through a GPS or the like. Meanwhile, the personal information may also be received from an external organization. In this case, the external organization may be a medical organization retaining the physical information and medical information of a user.

The control server 32 may transmit and receive at least one piece of data to and from the management device 31. For example, the control server 32 may be installed in each unit zone. The control server 32 may include a data storage and a process for processing data. The control server 32 may receive the operation information from the management device 31. The operation information may refer to information on the operation of the management device 31. For example, the operation information may include at least any one of the operation function, operating time, operating period, operation frequency, or operation pattern of the management device 31, but examples are not limited thereto. The control server 32 may generate the propensity information of the user U by analyzing the operation information of the management device 31. The propensity information may refer to information on which propensity the user U has. For example, the propensity information may include at least any one of an interest index by functions, an interest index by devices, an interest index by fields, or a composite interest index of the user U, but examples are not limited thereto. The control server 32 may select at least one piece of customized information according to the propensity information. The customized information may refer to information suitable for the propensity of the user U. For example, the customized information may include at least any one of products, services, and functions recommended to the user or information on the inspection and replacement of a management device the user is using, but examples are not limited thereto.

As such, the interactive system 3 may analyze the propensity of the user U by analyzing the operation information of the management device 31 in the control server 32 and may provide the customized information for the user U to improve the satisfaction and convenience of the user U. Hereinafter, the propensity information and the customized information are described in detail.

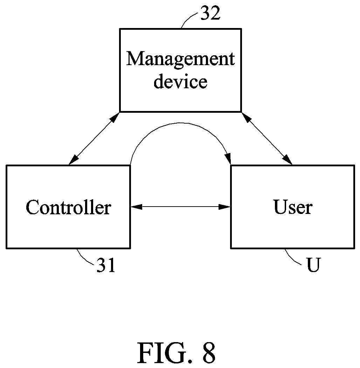

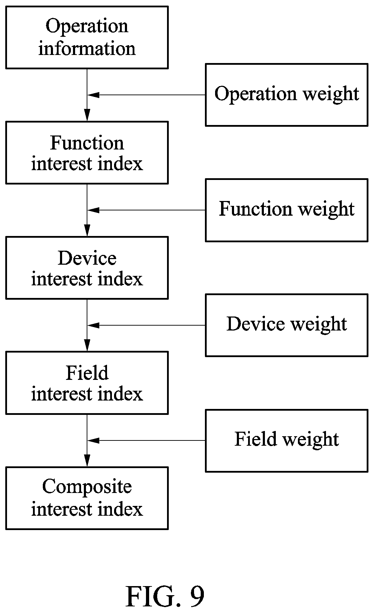

FIG. 8 is a block diagram illustrating a field and function of a management device, according to an embodiment. FIG. 9 is a flowchart illustrating the generating of an interest index, according to an embodiment.

Referring to FIGS. 8 and 9, the control server 32 may collect operation information by each function of the management device 31. For example, one management device 31 may include a plurality of functions. The control server 32 may collect the operation information, for example, at least any one of an operating time, an operating period, an operation frequency, or an operation pattern, by each function of the management device 31. The operating time may refer to information on a time at which a function is operated. The operating period may refer to information on how long the function is being operated. The operation frequency may refer to information on how often the function is operated. The operation pattern may refer to information on in which pattern the function is operated.

The control server 32 may collect the operation information by each function and may generate a function interest index by using the operation information. The function interest index may be an index indicating how interested the user U is in a function. The function interest index may be generated by each function. The control server 32 may generate the function interest index by using numerical values of the operation information of the function. For example, the function interest index may be higher as the operating period of the function is longer, and the function interest index may be higher as the operation frequency is higher. For example, the control server 32 may generate the function interest index by assigning an operation weight to the operation information of the function. The operation weight may be differently applied to each function depending on the characteristics of the function or the operation pattern of the function. For example, if the characteristic of the function requires long-term use, a weight to be applied to the operation period may be set low. Alternatively, if the characteristic of the function requires short-term use, the weight to be applied to the operation period may be set high.

The control server 32 may collect the function interest index by each management device 31. When the management device 31 has the plurality of functions, a plurality of function interest indices may be generated for the management device 31, and the control server 32 may collect the plurality of function interest indices by each management device 31. The control server 32 may generate a device interest index by using the function interest index. The device interest index may be an index indicating how interested the user U is in the management device 31. For example, the control server 32 may generate the device interest index by assigning a function weight to the function interest index.

The function weight may be determined by using the environmental information of the target space of the personal information of the user U. The environmental information of the target space may include the position of the target space, the geographical environment around the target space, or the like. For example, the environmental information of the target space may include information on whether the target space is a living room, a kitchen, a bedroom, or a bathroom. The environmental information of the target space may include information on whether there is a factory, a hospital, or a road or a mountain, a field, a forest, a stream, a river, or the sea around the target space, how close it is, or the like. The necessity or importance of the function may be differently evaluated depending on such environmental information. Accordingly, the function weight may be determined by using the environmental information of the target space. For example, when the environmental characteristics of the target space highly require the function, a high function weight may be assigned. The personal information of the user U may include information on the age, gender, height, weight, or medical history of the user U. The necessity or importance of the function may be differently evaluated depending on such personal information of the user U. For example, when the user U is a young infant, the importance of a specific function is evaluated to be high, and thus, a high function weight may be assigned to the specific function. For example, when the user U has the history of suffering from a specific disease, the importance of a specific function is evaluated to be high, and thus, a high function weight may be assigned to the specific function. The control server 32 may normalize the device interest index by taking an average as many as the number of functions for the management device 31 having the plurality of functions.

Meanwhile, according to an embodiment, the control server 32 may generate the device interest index by collecting the operation information by each management device 31. In other words, the device interest index may be directly generated without going through the function interest index. The control server 32 may generate the device interest index by assigning a weight to the operation information by each management device 31. In this case, the assigned weight may be determined by using at least any one of the characteristics of a function, the operation pattern of the function, the environmental information of the target space, and the personal information of the user U.

The control server 32 may group the management devices 31 into at least one field. For example, the control server 32 may perform grouping into at least one of a pest field, an air quality field, a water quality field, and a hygiene field according to the purpose of the management device 31. One management device 31 may be grouped into two or more fields. The grouping may be predetermined. The control server 32 may collect the device interest index of a corresponding management device 31 by each field. That is, the control server 32 may collect the device interest index of the management device 31 corresponding to each field. The control server 32 may generate a field interest index by using the device interest index. The field interest index may be an index indicating how interested the user U is in a field. For example, the control server 32 may generate the field interest index by assigning a device weight to the device interest index.

The device weight may be determined by using at least any one of the use period, replacement history, and price of the management device 31. The interest in a device may be differently evaluated depending on such device information. For example, as the user U uses the management device 31 for a long time, the importance of the management device 31 may be determined to be high, and thus, a high device weight may be assigned. For example, when there is history that the user U frequently replaces the management device 31 with a new model, this may indicate that the user U is highly interested in the management device, and thus, a high device weight may be assigned. For example, when the price of the management device 31 is high, this may indicate that the user U is highly interested in the management device, and thus, a high device weight may be assigned. When the plurality of management devices 31 is included in a field, the control server 32 may normalize the field interest index by taking an average as many as the number of the plurality of management devices 31.

The control server 32 may collect the field interest index and may generate a composite interest index by using the field interest index. The composite interest index may be an index indicating how interested the user U is in the management of the target space. For example, the control server 32 may generate the composite interest index by assigning a field weight to the field interest index.

The field weight may be determined by using the environmental information of the target space of the personal information of the user U. For example, the environmental information of the target space may include information on whether the target space is a kitchen, a bedroom, or a bathroom. The environmental information of the target space may include information on whether there is a mountain or a river or a factory or a hospital around the target space, how close it is, or the like. The necessity or importance of a field may be differently evaluated depending on such environmental information. Accordingly, the field weight may be determined by using the environmental information of the target space. For example, when the environmental characteristics of the target space highly require the field, a high field weight may be assigned. The personal information of the user U may include information on the age, gender, height, weight, or medical history of the user U. The necessity or importance of the field may be differently evaluated depending on such personal information of the user U. For example, when the user U is a young infant, the importance of a specific field is evaluated to be high, and thus, a high field weight may be assigned to the specific function. For example, when the user U has the history of suffering from a specific disease, the importance of a specific field is evaluated to be high, and thus, a high field weight may be assigned to the specific field.

The control server 32 may select customized information by using at least one of the function interest index, the device interest index, the field interest index, and the composite interest index. The control server 32 may provide the customized information to the user U through a display of the management device 31. The control server 32 may provide the customized information to the user U through a personal terminal of the user U. For example, the terminal of the user U may include a smartphone, a PC, a laptop, a tablet, a smartwatch, or a dedicated terminal, and may provide the customized information to the user U through an application, a messenger, a text, a call, a notification sound, or a display. The control server 32 may provide the customized information to the manager and may transmit the customized information to the user U through the manager.

The control server 32 may determine the frequency of providing the customized information to the user U according to the composite interest index. A high composite interest index may refer to the high interest of the user U in management of the target space. Accordingly, as the composite interest index of the user U is higher, by setting the frequency of providing the customized information higher, the need of the user U for the management of the target space may be satisfied. Meanwhile, a low composite interest index may refer to the low interest of the user U in the management of the target space. Accordingly, as the composite interest index of the user U is lower, by setting the frequency of providing the customized information lower, only the minimum essential customized information may be provided to the user U. The control server 32 may generate a composite interest index grade by grading the composite interest index by each section. The control server 32 may determine the frequency of providing the customized information, corresponding to the composite interest index grade.

The control server 32 may compare the field interest index of each field and may select more pieces of customized information as a field having a higher field interest index. For example, the control server 32 may select information on a product corresponding to a field having the highest field interest index as the customized information. The control server 32 may set the field having the highest field interest index as a main field of interest and a field having the second-highest field interest index as a secondary field of interest and may select information on a product corresponding to the main field of interest or the secondary field of interest as the customized information. The control server 32 may select product information in each field according to a ratio of field interest indices as the customized information. For example, when the ratio of the field interest indices among fields is 5:3:2, the pieces of customized information corresponding to the fields may be selected at a ratio of 5:3:2. For example, according to a ratio of the field interest indices of the main field of interest and the secondary field of interest, the control server 32 may select information on products respectively corresponding to the main field of interest and the secondary field of interest as the customized information. According to this configuration, more customized information on a field in which the user U is more interested may be provided.

The control server 32 may compare device interest indices and may select more pieces of customized information as the management device 31 having a higher device interest index. For example, the control server 32 may select the device information of the management device 31 having the highest device interest index as the customized information. The control server 32 may set the management device 31 having the highest device interest index as a main device of interest and the management device 31 having the second-highest device interest index as a secondary device of interest and may select the device information of the main device of interest or the secondary device of interest as the customized information. The control server 32 may select the device information of each management device 31 according to a ratio of device interest indices as the customized information. For example, when the ratio of the device interest indices among the management devices 31 is 2:1:1, the pieces of customized information corresponding to the management devices 31 may be selected at a ratio of 2:1:1. For example, according to a ratio of the device interest indices of the main device of interest and the secondary device of interest, the control server 32 may select pieces of device information respectively corresponding to the main device of interest and the secondary device of interest as the customized information. According to this configuration, more customized information on the management device 31 in which the user U is more interested may be provided.

Said device information may include at least any one of information on new products of the management device 31, information on the inspection of the management device 31, information on the replacement of the management device 31, information on consumables of the management device 31, news information on the management device 31, and information on the software updates of the management device 31. The control server 32 may select detailed customized information on the management device 31 by using the state information of the management device 31. For example, the control server 32 may select the information on new products of the management device 31 as the customized information when a newer product than the management device 31 is released or a warranty period of the management device 31 is expired. The control server 32 may select the information on the inspection of the management device 31 as the customized information when the inspection period of the management device 31 arrives. The control server 32 may select the information on the replacement of the management device 31 as the customized information when the management device 31 is defective or broken. The control server 32 may select the information on consumables of the management device 31 as the customized information when a consumable of the management device 31 is used up or a newer type of a consumable is released. The control server 32 may select the news information on the management device 31 as the customized information when the news information on the management device 31 is issued. The news information may be a concept including news, magazines, columns, or postings. According to this configuration, appropriate information on the management device 31 of interest may be provided to the user U.

The control server 32 may compare function interest indices and may select information on a product having a function having a high function interest index as the customized information. For example, the control server 32 may select information on the management device 31 including a function having the highest function interest index as the customized information. The control server 32 may set the function having the highest function interest index as a main function of interest and a function having the second-highest function interest index as a secondary function of interest and may select information on a product having the main function of interest or the secondary function of interest as the customized information. The control server 32 may select information on the management device 31 including both the main function of interest and the secondary function of interest as the customized information. The control server 32 may select device information including each function according to a ratio of function interest indices as the customized information. According to this configuration, more customized information on the management device 31 including a function in which the user U is more interested may be provided.

Meanwhile, the control server 32 may select information on a product that is not being used by the user U from among products corresponding to the main field of interest or the secondary field of interest as the customized information. For example, the control server 32 may select the customized information by using the function interest index or the device interest index. For example, information on the management device 31 including a function having a high function interest index may be selected as the customized information from among the management devices 31 that are not being used by the user U. According to this configuration, the management device 31 including a function in which the user U is interested may be recommended to the user, and thus, the need of the user U may be satisfied. In addition, information on the management device 31 similar to the management device 31 having a high device interest index may be selected as the customized information from among the management devices 31 that are not being used by the user U. According to this configuration, the management device 31 similar to a device in which the user U is interested may be recommended to the user, and thus, the need of the user U may be satisfied. Accordingly, the satisfaction of the user U may be improved since the most appropriate management device 31 for the user U may be selected from among the management devices 31 that are not being used even though they correspond to the main field of interest or the secondary field of interest of the user U.

The control server 32 may provide the selected pieces of customized information to the user U in a specific pattern. For example, the customized information with the highest interest index may be provided at a time when the user U mainly uses the management device 31. The control server 32 may adjust a time or frequency of exposing the pieces of customized information to the user U in proportion to the interest index. For example, an exposure time to the user U may be set relatively long for the customized information with a relatively high interest index, and the exposure time to the user U may be set relatively short for the customized information with a relatively low interest index.

When the user U is using a function, the management device 31, or the field, the control server 32 may provide the customized information on the function, the management device 31, or the field. When the user U is using the main function of interest or the secondary function of interest, the control server 32 may provide the customized information including information on a product having the main function of interest or the secondary function of interest to the user U. When the user U is using the main device of interest or the secondary device of interest, the control server 32 may provide the customized information including the device information of the main device of interest or the secondary device of interest to the user U. When the user U is using the management device 31 corresponding to the main field of interest or the secondary field of interest, the control server 32 may provide the customized information including product information corresponding to the main field of interest or the secondary field of interest to the user U. As such, appropriate customized information may be provided to the user U at an appropriate time by providing the customized information by using a function, a management device, or a field that is being used by the user U.

When the personal information of a plurality of users U is input to the management device 31, the control server 32 may generate pieces of propensity information of the users U respectively for the number of users U. For example, when the personal information of two users U is input to the management device 31, the operation information transmitted through the management device 31 may be classified into two groups, and the propensity information may be generated for each user U. To classify the operation information by each user U, the control server 32 may use machine learning. Alternatively, the operation information may be classified by each user U by the management device 31 transmitting the information on an operator together to the control server 32. The control server 32 may generate the propensity information of each user U and may select the customized information for each user U. When determining that the user U is using the management device 31, the control server 32 may provide the customized information for the user U.

Meanwhile, the control server 32 may select information on a product that is not being used by the user U as the customized information by using the environmental information of the target space. For example, the control server 32 may determine a product needed in the target space by analyzing the environmental information of the target space where the management device 31 is installed. For example, the control server 32 may determine that the management device 31 of the air quality field is needed when the target space has a higher dust occurrence rate than other spaces, and, when the user U is not using the management device 31 of the air quality field, may provide information on the management device 31 of the air quality field as the customized information. When determining the product needed in the target space, the control server 32 may use the information of the management devices 31 of another user U included in the target space. For example, when a significant number of management devices 31 of a specific field is included in the target space, the control server 32 may determine that the target space requires the management device 31 of the specific field.

Hereinafter, an interactive management method is described. However, when describing the interactive management method, the detailed description is omitted regarding the overlapping description of the interactive system provided above.

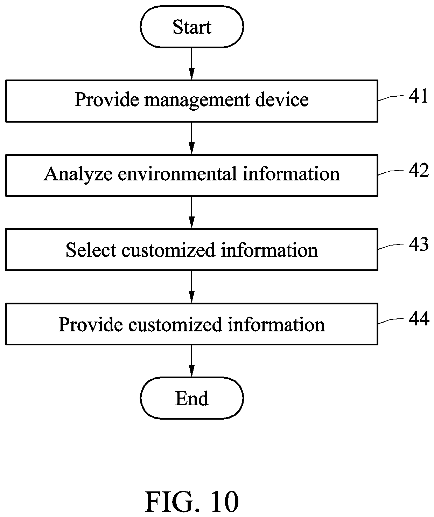

FIG. 10 is a flowchart illustrating an interactive management method according to an embodiment.

Referring to FIG. 10, an interactive management method 4, according to an embodiment, may be a method of interacting among a management device, a control server, and a user. In the interactive management method 4, the operation information of the management device 31 may be collected in the control server, and the control server may generate the propensity information of the user by analyzing the operation information. The control server may select customized information by using the propensity information and may provide this customized information to the user or a manager to provide customized feedback.

The interactive management method 4, according to an embodiment, may include management device provision operation 41, propensity information analysis operation 42, customized information selection operation 43, and customized information provision operation 44.

The management device provision operation 41 may be an operation of providing at least one management device that is included in a target space and manages the environment of the target space. The personal or position information of the user may be input to the management device. The control server may transmit and receive data to and from the management device. The management device may transmit the operation information to the control server. The control server may be installed in each unit section to transmit and receive data to and from at least one management device. The control server may include a data storage and a process for processing data.

The propensity information analysis operation 42 may be an operation of receiving the operation information of the management device in the control server and generating the propensity information of the user by analyzing the operation information. The operation information may include at least any one of an operation function, an operating time, an operating period, an operation frequency, or an operation pattern, but examples are not limited thereto. The control server may generate the propensity information of the user by analyzing the operation information of the management device. The propensity information may refer to information on which propensity the user has.

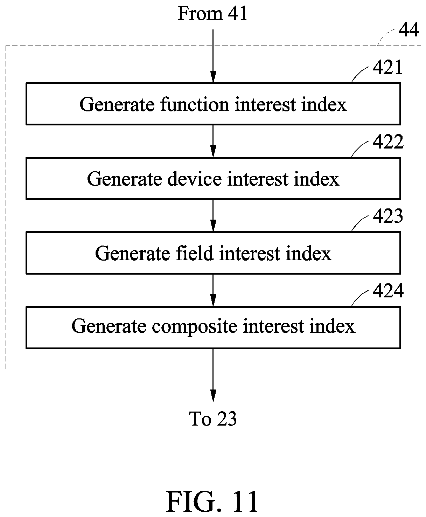

FIG. 11 is a flowchart illustrating a propensity information analysis operation according to an embodiment. Referring to FIG. 11, the propensity information analysis operation 42 may include function interest index generation operation 421, device interest index generation operation 422, field interest index generation operation 423, and composite interest index generation operation 424.

The function interest index generation operation 411 may be an operation of a control server collecting the operation information of each function of a management device and generating a function interest index by using the operation information. The function interest index may be an index indicating how interested a user is in a function. The function interest index may be generated by each function. The control server may generate the function interest index by using numerical values of the operation information of the function. The operation weight may be differently applied to each function depending on the characteristics of the function or the operation pattern of the function.

The device interest index generation operation 422 may be an operation of the control server collecting the operation information of each management device and generating a device interest index by using the operation information. The control server may collect the function interest index by each management device. When the management device has a plurality of functions, a plurality of function interest indices may be generated for the management device, and the control server may collect the plurality of function interest indices by each management device. The control server may generate a device interest index by using the function interest index. The device interest index may be an index indicating how interested the user is in the management device. For example, the control server may generate the device interest index by assigning a function weight to the function interest index. The function weight may be determined by using the environmental information of a target space of the personal information of the user. The environmental information of the target space may include the position of the target space, the geographical environment around the target space, or the like. The personal information of the user may include information on the age, gender, height, weight, or medical history of the user. The control server may normalize the device interest index by taking an average as many as the number of functions for the management device having the plurality of functions.

Meanwhile, the device interest index generation operation 422 may be an operation of the control server collecting the operation information of each management device and generating a device interest index by using the operation information. In other words, the device interest index may be directly generated without going through the function interest index. The control server may generate the device interest index by assigning a weight to the operation information by each management device. In this case, the assigned weight may be determined by using at least any one of the characteristics of a function, the operation pattern of the function, the environmental information of the target space, and the personal information of the user.

The field interest index generation operation 423 may be an operation of the control server grouping the management device into at least one field, collecting the device interest index of each field, and generating a field interest index by assigning a device weight to the device interest index. The control server may group the management devices into at least one field. One management device may be grouped into two or more fields. The grouping may be predetermined. The control server may collect the device interest index of a management device corresponding to each field. That is, the control server may collect the device interest index of the management device corresponding to each field. The control server may generate the field interest index by using the device interest index. The field interest index may be an index indicating how interested the user is in a field. For example, the control server may generate the field interest index by assigning a device weight to the device interest index. The device weight may be determined by using at least any one of the use period, replacement history, and price of the management device. When a plurality of management devices is included in a field, the control server may normalize the field interest index by taking an average as many as the number of the plurality of management devices.

The composite interest index generation operation 424 may be an operation of the control server collecting the field interest index and generating a composite interest index by assigning a field weight to the field interest index. The composite interest index may be an index indicating how interested the user is in the management of the target space. For example, the control server may generate the composite interest index by assigning the field weight to the field interest index. The field weight may be determined by using the environmental information of the target space of the personal information of the user. The personal information of the user may include information on the age, gender, height, weight, or medical history of the user.

Referring to FIG. 10 again, the customized information selection operation 43 may be an operation of the control server selecting at least one piece of customized information according to the propensity information. The control server may select customized information by using at least one of the function interest index, the device interest index, the field interest index, and the composite interest index. The control server may compare the field interest index of each field and may select more pieces of customized information as a field having a higher field interest index.

The selection operation 43 may include an operation of the control server setting a field having the highest field interest index as a main field of interest and a field having the second-highest field interest index as a secondary field of interest and selecting information on a product corresponding to the main field of interest or the secondary field of interest as the customized information. The control server may select product information in each field according to a ratio of field interest indices as the customized information. According to a ratio of the field interest indices of the main field of interest and the secondary field of interest, the control server may select information on products respectively corresponding to the main field of interest and the secondary field of interest as the customized information.

The selection operation 43 may include an operation of the control server selecting the device information of the management device having the highest device interest index as the customized information. The control server may compare device interest indices and may select more pieces of customized information as the management device having a higher device interest index. For example, the control server may select the device information of the management device having the highest device interest index as the customized information.

The selection operation 43 may include an operation of the control server setting the management device having the highest device interest index as a main device of interest and the management device having the second-highest device interest index as a secondary device of interest and selecting the device information of the main device of interest or the secondary device of interest as the customized information. The control server may select the device information of each management device according to a ratio of device interest indices as the customized information. According to a ratio of the device interest indices of the main device of interest and the secondary device of interest, the control server may select pieces of device information respectively corresponding to the main device of interest and the secondary device of interest as the customized information. Such device information may include at least any one of information on new products of the management device, information on the inspection of the management device, information on the replacement of the management device, information on consumables of the management device, and news information on the management device. The control server may select detailed customized information on the management device by using the state information of the management device. The news information may be a concept including news, magazines, columns, or postings.

The selection operation 43 may include an operation of the control server selecting information on a product having a function having the highest function interest index as the customized information. The control server may compare function interest indices and may select information on a product having a function having a high function interest index as the customized information. For example, the control server may select information on the management device including a function having the highest function interest index as the customized information.

The selection operation 43 may include an operation of the control server setting the function having the highest function interest index as a main function of interest and a function having the second-highest function interest index as a secondary function of interest and selecting information on a product having the main function of interest or the secondary function of interest as the customized information. The control server may select information on the management device including both the main function of interest and the secondary function of interest as the customized information. The control server may select device information including each function according to a ratio of function interest indices as the customized information.

The selection operation 43 may include an operation of the control server selecting information on a product that is not being used by the user from among products corresponding to the main field of interest or the secondary field of interest as the customized information. For example, the control server may select the customized information by using the function interest index or the device interest index. In addition, information on the management device similar to the management device having a high device interest index may be selected as the customized information from among the management devices that are not being used by the user. According to this configuration, the satisfaction of the user may be improved since the most appropriate management device for the user may be selected from among the management devices that are not being used even though they correspond to the main field of interest or the secondary field of interest of the user.

Meanwhile, the control server may select information on a product that is not being used by the user as the customized information by using the environmental information of the target space. For example, the control server may determine a product needed in the target space by analyzing the environmental information of the target space where the management device is installed. When determining the product needed in the target space, the control server may use the information of the management devices of another user included in the target space. For example, when a significant number of management devices of a specific field is included in the target space, the control server may determine that the target space requires the management device of the specific field.

The customized information provision operation 44 may be a provision operation of providing the customized information to the user or a manager. The control server may provide the customized information to the user through a display of the management device. The control server may provide the customized information to the user through a personal terminal of the user. The control server may provide the customized information to the manager and may transmit the customized information to the user through the manager.

The customized information provision operation 44 may include an operation of the control server determining the frequency of providing the customized information to the user according to the composite interest index. The control server may generate the composite interest index grade by grading the composite interest index by each section. The control server may determine the frequency of providing the customized information, corresponding to the composite interest index grade.

The control server may provide the selected pieces of customized information to the user in a specific pattern. For example, the customized information with the highest interest index may be provided at a time when the user mainly uses the management device. The control server may adjust a time or frequency of exposing the pieces of customized information to the user in proportion to the interest index. For example, an exposure time to the user may be set relatively long for the customized information with a relatively high interest index, and the exposure time to the user may be set relatively short for the customized information with a relatively low interest index.

When the user is using a function, the management device, or the field, the control server may provide the customized information on the function, the management device, or the field. When the user is using the main function of interest or the secondary function of interest, the control server may provide the customized information including information on a product having the main function of interest or the secondary function of interest to the user. When the user is using the main device of interest or the secondary device of interest, the control server may provide the customized information including the device information of the main device of interest or the secondary device of interest to the user. When the user is using the management device corresponding to the main field of interest or the secondary field of interest, the control server may provide the customized information including product information corresponding to the main field of interest or the secondary field of interest to the user. As such, appropriate customized information may be provided to the user at an appropriate time by providing the customized information by using a function, a management device, or a field that is being used by the user.

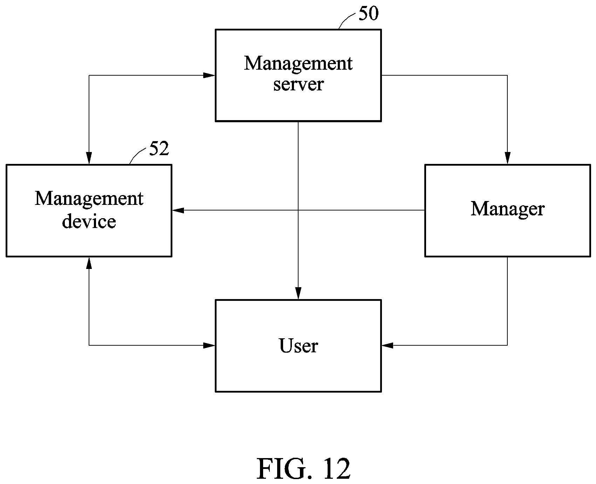

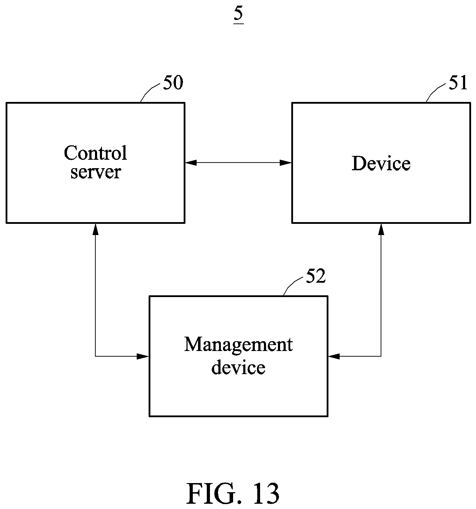

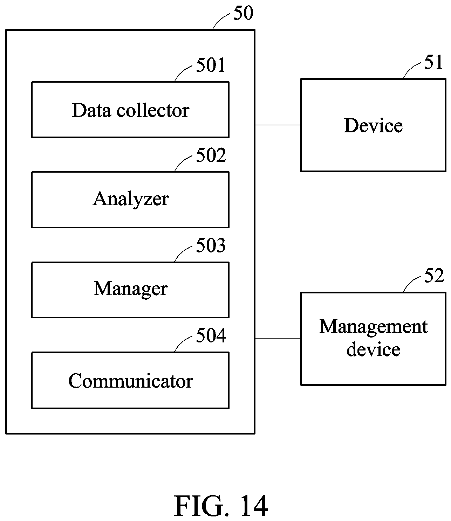

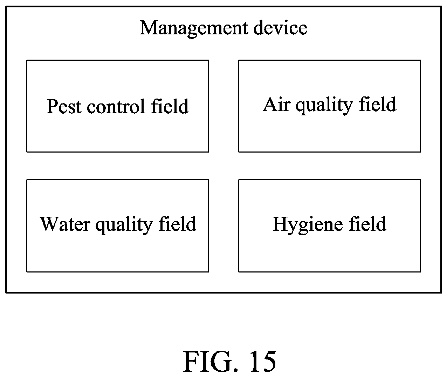

FIG. 12 is a structural diagram illustrating an interactive environment management system according to an embodiment, FIG. 13 is a block diagram illustrating the interactive environment management system according to an embodiment, FIG. 14 is a structural diagram illustrating a control service according to an embodiment, and FIG. 15 is a block diagram illustrating an environmental field managed by a management device, according to an embodiment.

Referring to FIGS. 12 to 15, the interactive environment management system according to an embodiment may analyze an environmental condition of a target zone and may select a management service required for the environment of the target zone. The interactive environment management system may provide an operation instruction for the selected management service to a manager who manages the environment of the target zone. The interactive environment management system may include a management device, a control server, and a manager device. The interactive environmental management system may select an appropriate management service based on the environmental condition of the target zone and may provide the selected management service to the manager to actively and preemptively manage the environment of the target zone. The manager may refer to a person who provides a management service for the target zone.

The management device may be included in the target zone and may manage the environment of the target zone. The management device may manage one or more environmental fields. For example, the management device may manage at least one environmental field among a pest control field, an air quality field, a water quality field, and a hygiene field. For example, a management device 51 of the pest control field may include a pest trap device or a rodent trap device. The management device 51 of the air quality field may include an air purifier, a ventilator, a dehumidifier, a humidifier, or a dispenser. The management device 51 of the water quality field may include a water purifier. The management device 51 of the hygiene field may include a sterilizer, a disinfector, or a bidet. However, the foregoing examples are just examples, and the examples are not limited thereto.

The control server may collect information through the management device and may select a management service required for the target zone based on the collected information. The control server may communicate in two-way with at least one management device. The control server may set a certain zone as one management unit and may be installed in each management unit.

The control server may include a data collector, an analyzer, a management unit, and a communicator.

The data collector may collect information related to the environment of the target zone. For example, the data collector may collect the environmental information of the target zone recognized through the management device. The environmental information may refer to environmental information, like pest control, air quality, water quality, and hygiene in the target section, managed by the management device.

The pest control information may include the internal and external meteorological information of a pest trap device that traps pests and pest information detected in the pest trap device. For reference, the pests herein may collectively refer to insects or animals that are harmful to human beings and livestock. The internal and external meteorological information of the pest trap device may include at least one of the temperature, humidity, wind direction, weather, time, or advisories or warnings issued by the national meteorological agency in a zone including the pest trap device. The pest information detected in the pest trap device may include at least one of the type of pests, harmfulness information, behavior information according to season and time, entry and exit information, route information, weight information, or prey intake information.

The air quality information may include at least one of the internal and external meteorological information of a measurement device that measures air quality or the indices and components of atmospheric environment. The internal and external meteorological information of the measurement device may include at least one of the temperature, humidity, wind direction, weather, time, or advisories or warnings issued by the national meteorological agency in a zone including the measurement device. The air quality information may include an atmospheric environment index, including air pollution measurements on how polluted the air currently is or how the degree of pollution is going to change. In addition, the air quality information may include ingredient information on various VOCs, such as formaldehyde, radon, toluene, benzene, or acetone, which is a carcinogenic substance generated from various indoor construction materials, pollutants, such as nitrogen dioxide generated from asbestos, or carbon dioxide generated in the ignition of gas used for cooking in kitchen or the respiration of a human body.

The water quality information may include at least one of the internal and external meteorological information of a water quality measurement device that measures water quality or the turbidity, chromaticity, carbonate hardness, total hardness, pH, odor, ingredient, dissolved oxygen amount, or conductivity of the water quality. The internal and external meteorological information of the water quality measurement device may include at least one of the temperature, humidity, wind direction, weather, time, or advisories or warnings issued by the national meteorological agency in a zone including the water quality measurement device. In addition, the ingredients may include TDS. The TDS may refer to minerals, salts, metals, cations, or anions dissolved in water. In addition, the measurement information of aesthetic impact materials, including chloride ions, KMnO4 consumption, total hardness, sulfate ions, evaporation residues, detergents, iron, copper, zinc, manganese, or aluminum, may also be included. Information on inorganic materials having harmful effects on health, including mercury, cyanide, arsenic, hexavalent chromium, cadmium, lead, fluorine, selenium, nitrate nitrogen, ammonia nitrogen, or boron, may also be included, or information on organic materials having harmful effects on health, including phenol, THM, diazinon, parathion, fenitrothion, carbanyl, residual chlorine, benzene, toluene, ethylbenzene, xylene, chloroform, dibromochloromethane, 1.1.1-trichloroethane, 1.2-dibromo-3-chloropropane, tetrachloroethylene, chloral hydrate, trichloroethylene, dibromoacetonitrile, dichloroacetonitrile, trichloroacetonitrile, dichloromethane, 1.1-dichloroethylene, carbon tetrachloride, haloacetic acid, bromodichloromethane, or 1.4-dioxane, may also be included. The water quality information may include FPA values.

The hygiene information may include at least one of the internal and external meteorological information of a hygiene measurement device that measures hygiene or the bacterial information of the inside and outside of the hygiene measurement device. The internal and external meteorological information of the hygiene measurement device may include at least one of the temperature, humidity, wind direction, weather, time, or advisories or warnings issued by the national meteorological agency in a zone including the hygiene measurement device. The bacterial information may include various pieces of information, which may be used to analyze the current state of bacteria, such as the type of bacteria detected in the hygiene measurement device, a degree of bacterial reproduction, or the number of bacteria.

The data collector may include the operation information of the management device together with the environmental information. For example, the operation information collected by the data collector may include the operation function, operating time, operating period, operation frequency, and operation pattern of the management device, information on the inspection and replacement of the management device, or the software version information of the management device.

The data collector may collect information on the surrounding environment of the target zone. For example, the control server may collect, through the management device, the real-time environmental information of the target zone and the device information of the management device. The control server may collect environmental information surrounding the target zone through an external server. For example, the external server may be linked to the external server, providing various pieces of environmental information, including Korea Meteorological Administration, National Fire Agency, Air Korea, National Crop Pest Management System, National Ambient Monitoring Information System, National Center for Fine Dust Information, Water Environment Information System, or Water Resources Management Information System. The environmental information of the surroundings of the target zone may refer to environmental information in a regional range including the target zone. In addition, the environmental information around the target zone may include environmental change events that affect the target zone, such as pest outbreaks, rodent outbreaks, fire outbreaks, yellow dust warnings, fine dust warnings, ultrafine dust warnings, strong wind warnings, high seas warnings, heavy rain warnings, heavy snow warnings, dry weather warnings, storm surge warnings, typhoon warnings, heat wave warnings, cold wave warnings, occurrence of radon, occurrence of VOCs, occurrence of radioactivity, occurrence of infectious diseases, occurrence of natural disasters, weather changes, or water quality changes. When these events occur, the environmental condition of the target zone may change. However, the foregoing examples are just examples, and the events are not limited thereto. Anything that may cause a change in environmental conditions in the target zone may be an event.

The analyzer may analyze the environmental condition of the target zone based on the information collected through the data collector. The analyzer may analyze the environmental condition of the target zone in various ways.

The analyzer may classify the collected information into a plurality of factors and may generate an analysis result on the environmental condition of the target section through a combination of the classified factors. For example, when the analyzer analyzes air quality, the analyzer may classify the information on the air quality in the target zone into the factors, like a fine dust concentration, a radon concentration, a carbon dioxide concentration, or a carbon monoxide concentration. The analyzer may generate an individual indicator by applying an individual weight to each of the classified factors and may generate the analysis result by extracting some factors of the plurality of factors, based on the generated individual indicator. Since an impact on the environment varies depending on the concentration of each factor, the analyzer may perform efficient management by quantifying each factor into an individual indicator. The analyzer may generate the analysis result by selectively extracting a factor having a high impact on the environmental condition of the target zone from among respective individual indicators of the factors. For example, if a carbon monoxide risk indicator in the target zone is higher than other factors, the analyzer may analyze the air quality of the target zone as dangerous.

The analyzer may extract and quantify some factors requiring contradictory management services from among the plurality of factors and may generate the analysis result based on the numerical values of the extracted factors. For example, under the assumption that the analyzer manages the air quality of the target zone, while the increase and decrease of the carbon dioxide concentration of the target zone requires the ventilation of the target zone, the increase and decrease of the fine dust concentration of the target zone may require the closing of windows of the target zone. In this case, the analyzer may generate an accurate analysis result to provide more appropriate management services based on the numerical values of the extracted factors.

The analyzer may classify the environmental condition of the target zone into one environmental grade among a plurality of reference environmental grades. For example, under the assumption that the analyzer analyzes the air quality field of the target zone, the analyzer may classify the air quality state of the target zone into one of the plurality of reference environmental grades, like a dangerous state, a stable state, or a comfortable state. In this case, the classification of the reference environmental grades may be set according to the characteristics of the target zone. The characteristics of the target zone may include the position, size, or use purpose of the target zone, or information on the number of people accessing the target zone. The reference environmental grades may be classified into a plurality of detailed grades when the target zone requires more detailed environmental conditions, for example, the target zone requires a high level of hygiene, like a hospital. On the other hand, if the target zone requires a relatively low level of hygiene, like a factory, the number of classifications of the reference environmental grades may decrease.

The analyzer may evaluate the environmental condition of the target zone with a quantified environmental index. The plurality of environmental grades may be distinguished through the quantified environmental index. The plurality of environmental grades may be set to distinguish a numerical range of the quantified environmental index and the setting of the environmental grades may be determined according to the environmental characteristics of the target zone.

The analyzer may correct the quantified environmental index through the information on the environment surrounding the target zone. For example, the control server may set a regional range based on the target zone as a geofence for management. The analyzer may analyze the environmental condition of the target zone by reflecting environmental information in the geofence.

The analyzer may set one or more surveillance zones in the geofence. For example, if the target zone is a food factory, a surveillance zone set by the analyzer may be a chemical factory adjacent to the food factory. The analyzer may generate an environment correction value by quantifying an impact of the environment of a surveillance zone on the environment of the target zone and may correct an environmental index of the target zone through the environment correction value. In this case, the environment correction value may reflect information, including a distance between the surveillance zone and the target zone, the geographical characteristics between the surveillance zone and the target zone, and the environmental condition of the surveillance zone.

The analyzer may recognize an environmental event occurring in the geofence and may correct the environmental index of the target zone through an impact of the recognized environmental event on the target zone. For example, if wildfire breaks out in the geofence, the analyzer may predict an air quality change of the target zone according to an impact of the wildfire and may analyze the air quality state of the target zone. The analyzer may generate an event correction value by quantifying an impact of the recognized environmental event on the target zone and may correct an environmental index of the target zone through the event correction value.

Meanwhile, the analyzer may evaluate an expected environmental index of the target zone over time through the environmental information in the geofence. The management unit may determine response management services of the target zone over time through the expected environmental index.

When a management service is performed on the target zone, the analyzer may reevaluate the environmental index of the target zone through feedback according to a performance result.

The management unit may select a management service required for the target zone, based on the environmental condition, analyzed by the analyzer, of the target zone. The management unit may set a database on management services and may select a management service matching the analysis result of the analyzer from the database.

The management unit may define management services respectively matching environmental grades, evaluated by the analyzer, of the target zone and may select a management service suitable for the target zone through the defined environmental grades. In this case, the management unit may select the management service suitable for the environmental condition of the target zone from among the management services matching the environmental grades of the target zone, based on the type of received information. For example, if the air quality of the target zone is determined to be at a dangerous level, a corresponding management service may include services, such as the ventilation of the target zone, the removal of pollutants, or the inspection of the management device. In this case, when the malfunction information of the management device is received, of the collected information, the management unit may determine that the inspection of the management device is an appropriate management service among the management services matching the environmental grades.

On the other hand, the management unit may define a management service corresponding to an individual indicator of each of the plurality of factors classified by the analyzer in a matrix and may select a matching management service from the matrix by combining individual indicators of the extracted factors. For example, when management services respectively corresponding to individual indicators of respective factors are defined, the management unit may combine the management services matching the individual indicators of the respective factors in a matrix form and may determine a comprehensive management service operation instruction for the target zone.

The communicator may transmit information on the selected management service to the manager device.

The communicator may recognize, in real time, the position of the manager who has the manager device through the position information of the manager device. When the management service is selected through the management unit for the target zone, the communicator may select a manager device close to the target zone and may transmit an operation instruction signal according to the management service to the selected manager device.

Hereinafter, an interactive environment management method is described. However, when describing the interactive environment management method, the detailed description is omitted regarding the overlapping description of the interactive environment management system provided above.

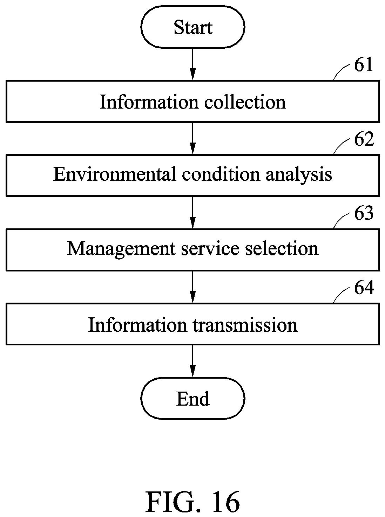

FIG. 16 is a flowchart of another interactive environment management system according to an embodiment.

Referring to FIG. 16, an interactive environment management method may effectively provide a management service required for the environment of a target zone. The interactive environment management method, according to embodiments, may collect environmental information on the target zone including a management device and may select an appropriate management service by analyzing an environmental condition of the target zone, based on the collected information. The interactive environment management method may provide the selected management service to a manager who manages the target zone and may provide a service related to the environment of the target zone in an active and preemptive manner.

The interactive environment management method may include an operation of collecting information on the environment of the target zone, an operation of analyzing the environmental condition of the target zone based on the collected information, an operation of selecting a management service matching an analysis result, and an operation of transmitting information on the selected management service.

The operation of collecting the information on the environment of the target zone may be the collecting of information on one or more environmental elements regarding the target zone. This information collection may be performed through the management device installed in the target zone. In this case, an environmental element of the target zone managed by the management device may include at least one of a pest state, an air quality state, a water quality state, or a hygiene state.

Meanwhile, the information collected through the management device may include the environmental information of the target zone sensed by the management device and the operation information of the management device.

The operation of analyzing the environmental condition of the target zone may be the analyzing of the environmental condition of the target zone in various ways.

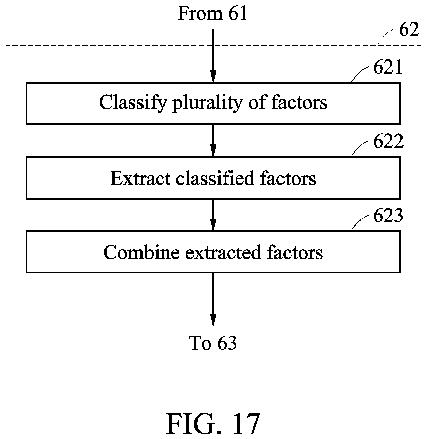

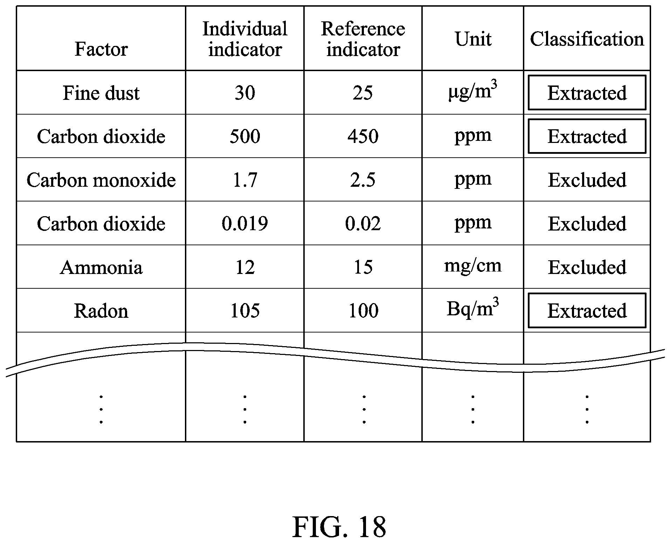

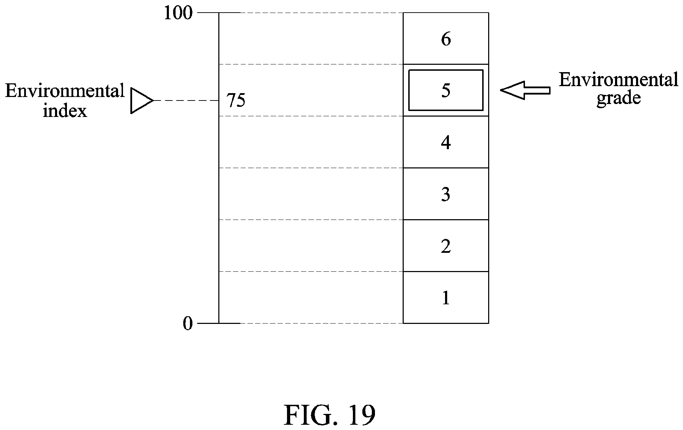

FIG. 17 is a flowchart illustrating an environmental condition analysis operation according to an embodiment, FIG. 18 is a graph illustrating a factor extraction method of an environmental condition analysis operation, and FIG. 19 is a diagram illustrating a grading method of an environmental condition analysis operation.

Referring to FIGS. 17 to 19, an operation of analyzing an environmental condition of a target zone may include an operation of classifying collected information into a plurality of factors, an operation of extracting some factors from among the plurality of factors classified according to a set condition, and an operation of generating an analysis result regarding the environmental condition of the target zone by combining the extracted factors.

The operation of classifying the collected information into the plurality of factors may be the classifying of information on environmental elements to be analyzed into factors. For example, if an environmental element to be analyzed is a pest-related element, the collected information may be classified into elements, such as the type of pests, the number of pests per unit area, or the state of a pest trap device.

The operation of extracting factors may be the extracting of some factors among the plurality of factors that are classified according to a set condition. The operation of extracting factors may include an operation of setting an individual weight to each factor, an operation of generating an individual indicator for each factor, and an operation of extracting some factors of the plurality of factors based on the rankings of individual indicators.

The operation of setting the individual weight may be the setting of an individual weight to each factor classified based on the characteristics of the target zone. For example, if the target zone is a food factory, a weight for pests may be set higher than a weight for air quality.

The operation of setting an individual indicator may be the generating of an individual indicator for each factor by applying the individual weight to each classified factor.

The operation of extracting factors may be the extracting of some factors among the plurality of factors according to a set condition. The operation of extracting factors may be the selective extracting and quantifying of factors requiring contradictory management services from among the plurality of factors. In this case, the environmental condition of the target zone may be analyzed according to the extracted factors.

The operation of generating the analysis result according to the environmental condition of the target zone may include an operation of evaluating the environmental condition of the target zone with a quantified environmental index, an operation of setting a plurality of reference environmental grades based on the characteristics of the target zone, and an operation of classifying the environmental condition of the target zone into one of the plurality of reference environmental grades.

The operation of evaluating the environmental condition of the target zone with a quantified environmental index may include an operation of generating an initial value of an environmental index through the environmental information of the target zone, an operation of generating a correction value for the environmental index, and an operation of generating a result value for the environmental index by applying the correction value to the initial value.

The operation of generating a correction value may be the generating of the correction value by quantifying an impact of the environment of a surveillance zone set in a regional range based on the target zone on the target zone. In addition, the operation of generating a correction value may be the generating of the correction value by quantifying an impact, on the target zone, of an environmental event occurring in the regional range based on the target zone.

The operation of setting the plurality of reference environmental grades may be the setting of the plurality of reference environmental grades by dividing a numerical range of the environmental index into each section. In this case, the setting of the reference environmental grades may be performed based on, for example, the position, geographical characteristics, size, or use purpose of the target zone, the number of people accessing the target zone, or occupants of the target zone.

The operation of selecting a management service may be the selecting of a management service suitable for the target zone, based on the analyzed environmental condition of the target zone.

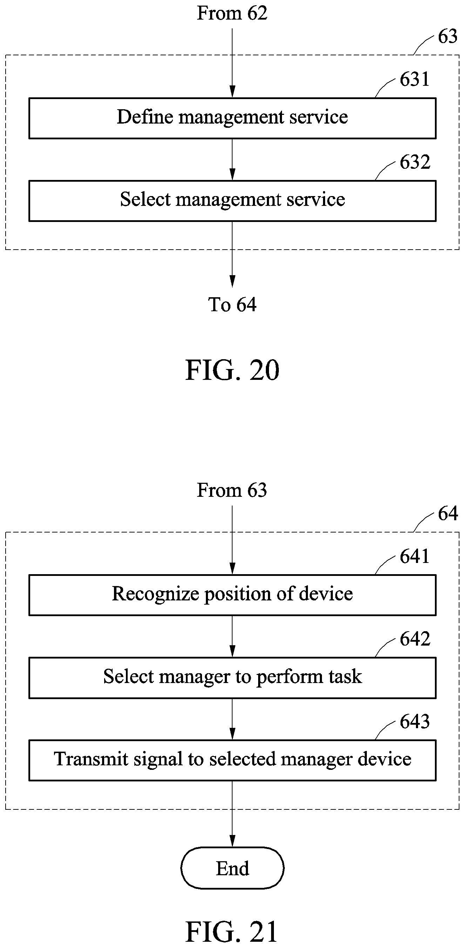

FIG. 20 is a flowchart illustrating a management service selection operation according to an embodiment, and FIG. 21 is a flowchart illustrating a management service information transmission operation according to an embodiment.

Referring to FIGS. 20 and 21, the management service selection operation may include an operation of defining a management service for a reference environmental grade and an operation of selecting a management service matching a classified environmental grade of a target zone.

The management service information transmission operation may be the providing of the selected management service for the target zone to a manager who manages the target zone. An operation instruction for the management service may be transmitted through a manager device. The management service information transmission operation may include an operation of recognizing the positions of managers who manage the target zone through a device, an operation of selecting a manager to perform a management service according to their proximity to the target zone, and an operation of transmitting an operation instruction according to the management service to a device of the selected manager.

The operation of selecting a manager may be the determining of whether a manager may perform the management service, through the schedule information of the manager, and the selecting of the manager who may perform the management service.

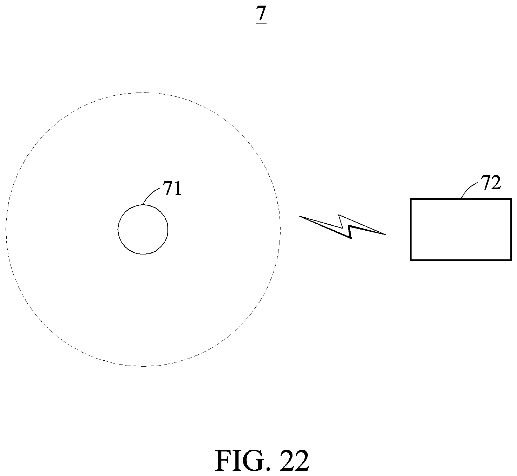

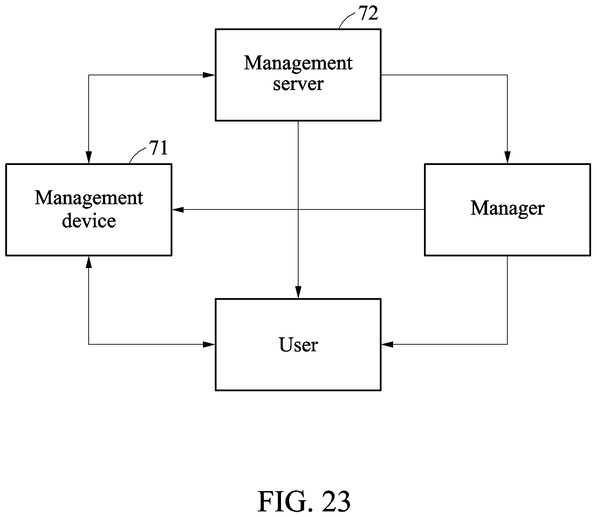

FIG. 22 is a schematic diagram illustrating the interactive environment management system according to an embodiment. FIG. 23 is an interaction diagram illustrating the interactive environment management system according to an embodiment.

Referring to FIGS. 22 and 23, an interactive environment management system 7, according to an embodiment, may include a management device 71 and a control server 72. The interactive environment management system 7 may detect an environmental change event occurring around a target space including the management device 71. The interactive environment management system 7 may quantify and analyze an impact of an occurring event on the target space and may select a necessary response measure according to an analyzed result. The interactive environment management system 7 may provide the selected response measure to a management device, a user, or a manager and may manage an environmental condition of the target space by actively and preemptively responding to event occurrence. Here, the manager may refer to a person who provides a service for the management device 71.

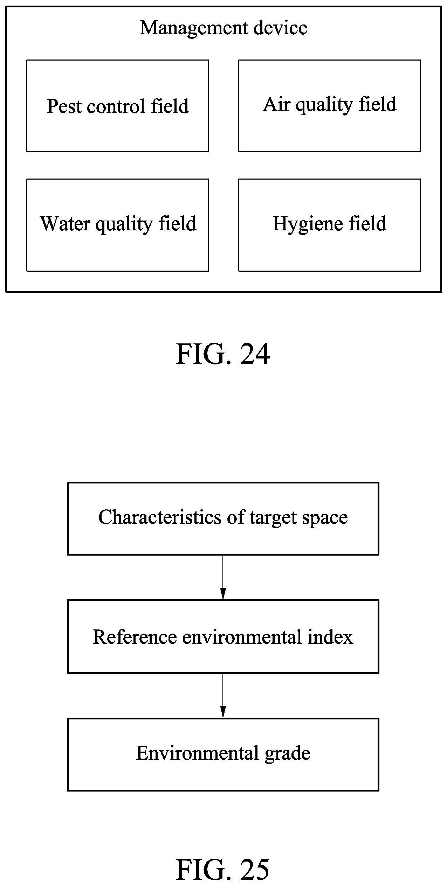

FIG. 24 is a block diagram illustrating a field of a management device, according to an embodiment.

The management device 71 may be included in a target space and may manage the environment of the target space. The management device 71 may include a management device of various fields. For example, the management device 71 may include a management device of at least one field among a pest control field, an air quality field, a water quality field, and a hygiene field. The management device 71 of the pest control field may include a pest trap device or a rodent trap device. The management device 71 of the air quality field may include an air purifier, a ventilator, a dehumidifier, a humidifier, or a dispenser. The management device 71 of the water quality field may include a water purifier. The management device 71 of the hygiene field may include a sterilizer, a disinfector, or a bidet. However, the foregoing examples are just examples, and the examples are not limited thereto.

Referring to FIGS. 22 and 23 again, the control server 72 may transmit and receive data to and from at least one management device 71. The control server 72 may be installed in each unit zone. The control server 72 may detect an environmental change event occurring around the target space. For example, the control server 72 may receive information on an environmental change of the target space from the management device 71. For example, the control server 72 may receive information on events that occur in the target space from an external server. For example, the external server may include at least one of Korea Meteorological Administration, National Fire Agency, Air Korea, National Crop Pest Management System, National Ambient Monitoring Information System, National Center for Fine Dust Information, Water Environment Information System, or Water Resources Management Information System. For example, the control server 72 may detect an environmental change event through a separate detector installed in a region adjacent to the target space.

The environmental change event may refer to an event that affects the target space. For example, the event may include at least one of pest outbreaks, rodent outbreaks, fire outbreaks, yellow dust warnings, fine dust warnings, ultrafine dust warnings, strong wind warnings, high seas warnings, heavy rain warnings, heavy snow warnings, dry weather warnings, storm surge warnings, typhoon warnings, heat wave warnings, cold wave warnings, occurrence of radon, occurrence of VOCs, occurrence of radioactivity, occurrence of infectious diseases, occurrence of natural disasters, weather changes, or water quality changes. When these events occur, the environmental condition of the target space may change. However, the foregoing examples are just examples, and the events are not limited thereto. Anything that may cause a change in environmental conditions in the target space may be an event.

When detecting the environmental change event around the target space, the control server 72 may quantify and analyze an impact of the event on the target space. The control server 72 may select a necessary response measure based on an analysis result.

Hereinafter, the detailed event analysis method and response measure selection method of the control server 72 are described.

FIG. 25 is a flowchart illustrating the generating of a reference environmental index and an environmental grade, according to an embodiment.

Referring to FIG. 25, the control server 72 may generate the reference environmental index and the environmental grade. An environmental index may refer to a numerical value representing an environmental condition of a target space. As the environmental condition is worse, the environmental index may have a greater value. The reference environmental index may refer to a numerical value that serves as a basis for the environmental condition of the target space. That is, the reference environmental index may refer to a numerical value that serves as a basis for evaluating the environmental condition from the numerical value of the environmental index. The reference environmental index may be differently set depending on the target space by using the characteristics of the target space. In other words, the control server 72 may use the environmental information of the target space or the personal information of a user who stays in the target space when generating the reference environmental index.

The environmental information of the target space may include the position, use purpose, and scale of the target space, or the position, use purpose, and scale of facilities around the target space. Depending on this environmental information of the target space, the standard for managing the environmental condition of the target space may vary. For example, the required management standard for the environmental condition may vary depending on whether the use purpose of the target space is a school, a hospital, a residence, or a factory. For example, the hospital may require a higher level of maintenance state than the residence, and the residence may require a higher level of maintenance state than the factory. The required level of management standard may vary depending on whether there is a factory, a hospital, or a road or a mountain, a field, a forest, a stream, a river, or the sea around the target space. The personal information of the user may include at least any one of age, gender, height, weight, or medical history. Depending on this personal information of the user, the standard for managing the environmental condition of the target space may vary. For example, if the user is a young infant, a high level of management may be required. For example, if the user has the history of suffering from a specific disease, strict management of factors that may cause the specific disease may be required. When there is a plurality of users, the respective pieces of personal information of the plurality of users may be used. Meanwhile, the personal information may be personal information registered in the management device 71 or may be received from an external organization. In this case, the external organization may be a medical organization retaining the physical information and medical information of the user.

The control server 72 may generate at least one reference environmental index. For example, the control server 72 may generate first, second, and third reference environmental indices. The control server 72 may generate at least 23 or more environmental grades having the at least one reference environmental index as a numerical boundary. For example, the control server 72 may generate first, second, third, and fourth environmental grades with the first, second, and third reference environmental indices as respective numerical boundaries. For example, the first environmental grade may correspond to a section less than the first reference environmental index, the second environmental grade may correspond to a section greater than or equal to the first reference environmental index and less than the second reference environmental index, the third environmental grade may correspond to a section greater than or equal to the second reference environmental index and less than the third reference environmental index, and the fourth environmental grade may correspond to a section greater than or equal to the third reference environmental index. For example, the first, second, third, and fourth environmental grades may respectively refer to comfort, proper, warning, and dangerous grades. Meanwhile, the foregoing examples are just examples, and the reference environmental index and the environmental grade may be generated in various numbers.

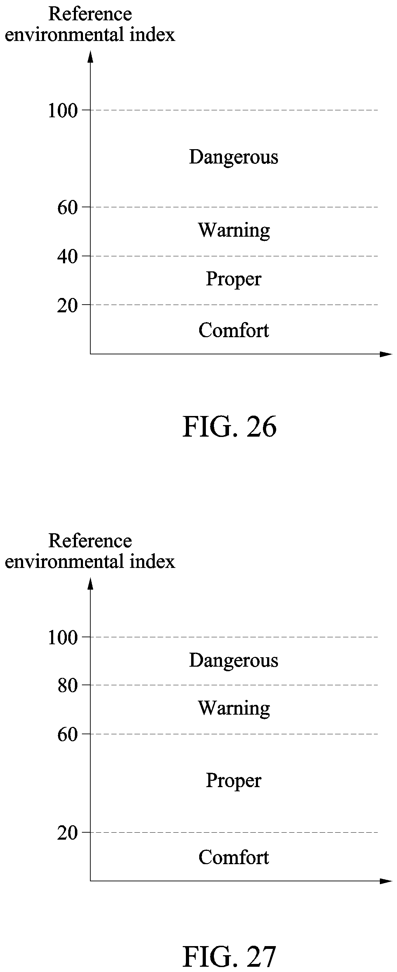

FIGS. 26 and 27 are graphs illustrating a reference environmental index and an environmental grade, according to an embodiment.

FIG. 26 illustrates an example of the reference environmental index and the environmental grade when a target space is a hospital. If the target space is a hospital, strict management of environmental conditions may be required. Accordingly, the reference environmental index may be set strictly. For example, as shown in FIG. 26, the reference environmental index may be set as 20, 40, and 60, in which a comfort grade may be less than 20, a proper grade may be greater than or equal to 20 and less than 40, a warning grade may be greater than or equal to 40 and less than 60, a dangerous grade may be greater than or equal to 60 and less than 100. Meanwhile, for kindergartens where infants and toddlers gather, food factories where food is processed, and semiconductor factories where semiconductors are processed, strict reference environmental indices and environmental grades may be set as shown in FIG. 26.

FIG. 27 illustrates an example of the reference environmental index and the environmental grade when the target space is a residence. If the target space is a residence, an environmental condition may be managed relatively leniently. Accordingly, the reference environmental index may be set leniently compared to the case of FIG. 26. For example, as shown in FIG. 27, the reference environmental index may be set as 20, 60, and 80, in which the comfort grade may be less than 20, the proper grade may be greater than or equal to 20 and less than 60, the warning grade may be greater than or equal to 60 and less than 80, the dangerous grade may be greater than or equal to 80 and less than 100.

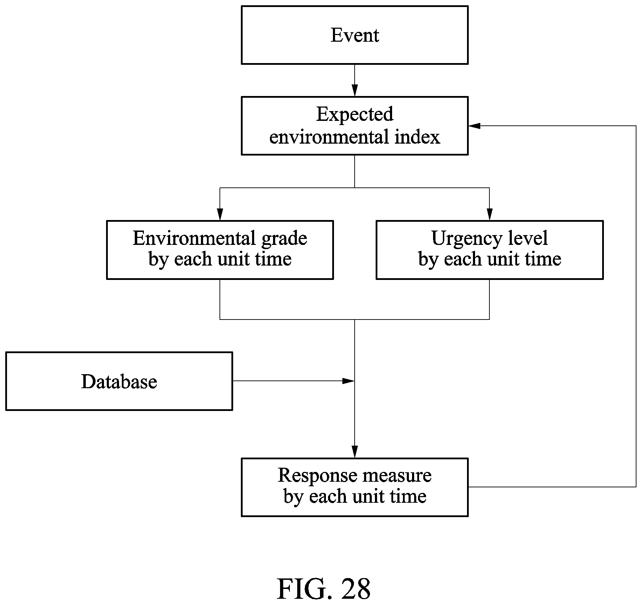

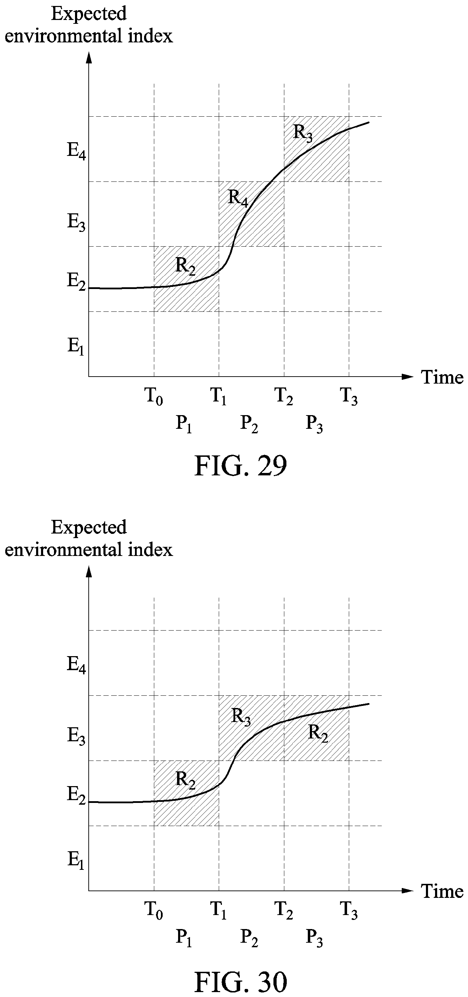

FIG. 28 is a flowchart illustrating a response measure selection process according to an embodiment. FIGS. 29 and 30 are graphs illustrating an expected environmental index according to an embodiment.

Referring to FIG. 28, the control server 72 may generate the expected environmental index according to event occurrence, may assign an environmental grade per unit time and an urgency level per unit time, and may select a response measure per unit time based thereon.

When detecting event occurrence, the control server 72 may generate the expected environmental index of a target space according to the event occurrence. The expected environmental index may refer to an expected result quantifying an impact of an event on the target space. Referring to FIGS. 29 and 30, the control server 72 may generate the expected environmental index as a temporal function. In other words, since the expected environmental index may change over time, the expected environmental index may be a type of function having time as a variable.

The control server 72 may generate the expected environmental index according to time by using at least any one of the type, scale, and occurrence time of an event and a distance between an occurrence point of the event and the target space. For example, depending on the type of the event, the expected environmental index may be differently generated. For example, if the scale of the event is large, the expected environmental index may be generated to have a great value, and, if the scale of the event is small, the expected environmental index may be generated to have a relatively small value. For example, the expected environmental index may be differently set depending on whether the event occurs during work hours or early morning. For example, if the event occurs proximal to the target space, the expected environmental index may be generated to have a great value, and, if the event occurred relatively far from the target space, the expected environmental index may be generated to have a relatively small value.

The control server 72 may divide the generated expected environmental index per unit time. For example, the unit time may refer to a time interval of a certain unit, like 1 hour or 30 minutes. The control server 72 may divide the expected environmental index per unit time, may assign an environmental grade and an urgency level per unit time, and may select a response measure per unit time.

The control server 72 may determine an environmental grade corresponding to the expected environmental index by each unit time and may assign the environmental grade by each unit time. For example, the control server 72 may assign the environmental grade based on an average value of the expected environmental index during a unit time. For example, referring to FIGS. 29 and 30, the control server 72 may evaluate which grade the expected environmental index belongs to by each unit time P1, P2, or P3, and may assign the environmental grade by each unit time. In the case of FIG. 29, an environmental grade E2 may be assigned at the unit time P1, an environmental grade E3 may be assigned at the unit time P2, and an environmental grade E4 may be assigned at the unit time P3. In the case of FIG. 30, the environmental grade E2 may be assigned at the unit time P1, the environmental grade E3 may be assigned at the unit time P2, and the environmental grade E3 may be assigned at the unit time P3. Alternatively, the control server 72 may assign the environmental grade based on the maximum, minimum, or median value of the expected environmental index during the unit time.

The control server 72 may calculate a gradient of the expected environmental index by each unit time and may determine urgency by each unit time according to the size of the gradient. For example, the expected environmental index may have different gradients per unit time. A large gradient of the expected environmental index may refer to rapid deterioration of the environmental condition, and a relatively small gradient of the expected environmental index may refer to relatively slow deterioration of the environmental condition. In other words, the large gradient of the expected environmental index may refer to high urgency, and the small gradient may refer to relatively low urgency. The control server 72 may calculate the gradient of the expected environmental index based on the gradient of the median value of the unit time. For example, the control server 72 may calculate the gradient of the expected environmental index corresponding to the time of (T0 + T1)/2 in the case of the unit time P1. Alternatively, the control server 72 may calculate a straight-line gradient between the expected environmental index corresponding to a time T0 and the expected environmental index corresponding to a time T 1 in the case of the unit time P 1.

The control server 72 may assign the urgent level according to the size of the gradient. That is, the urgency may be evaluated with a plurality of urgency levels. For example, the urgency may be evaluated with a first urgency level R1, a second urgency level R2, a third urgency level R3, and a fourth urgency level R4 depending on a size section of the gradient. The control server 72 may assign an urgency level by each unit time, matching according to the size of the gradient of the expected environmental index by each unit time. For example, in the case of FIG. 29, the urgency level R2 may be assigned at the unit time P1, the urgency level R4 may be assigned at the unit time P2, and the urgency level R3 may be assigned at the unit time P3. In the case of FIG. 30, the urgency level R2 may be assigned at the unit time P1, the urgency level R3 may be assigned at the unit time P2, and the urgency level R2 may be assigned at the unit time P3. For example, if the gradient of the expected environmental grade has a negative value, the urgency level R1 may be assigned.

The control server 72 may select a necessary response measure by comparing the reference environmental index with the expected environmental index. Specifically, this selection of a response measure may be performed per unit time. The response measure may include at least one of environment management through a management device, the provision of a management service required for the target space, or the provision, to a user, of an action guideline required to be performed. In the case of the environmental management through a management device, the control server 72 may manage the environment of the target space by remotely operating the management device 71. In the case of the provision of a management service required for the target space, the control server 72 may transmit a notification to a manager adjacent to the target space to provide the management service to the target space. In the case of the provision, to the user, of the action guideline required to be performed, the control server 72 may transmit information on the action guideline required to be performed to the user staying in the target space through an application, a messenger, a text, a call, a notification sound, or a display to the user.

The control server may include a database in which a plurality of response measures is listed and stored for each environmental grade. In the database, feasible response measures may be listed and stored by each type of an event. For example, as to fine dust outbreaks, the operation of an air purifier, the provision of an air purifier filter replacement service, the stopping of the operation of an exhaust fan, the closing of windows, the provision of a fine dust mask, or the suggestion to wear a fine dust mask may be stored as the feasible response measures. The type, strength, or frequency of the plurality of response measures may be differently set according to each environmental grade. The control server 72 may assign the environmental grade per time unit by comparing the reference environmental index with the expected environmental index by each unit time and may select the response measure per time unit, which matches the assigned environmental grade by using the type of an event. For example, in the case of FIG. 29, since the environmental grade at the unit time P1 is E2, the response measure that matches the environmental grade E2 and the type of an occurring event may be selected as a response measure from the database.

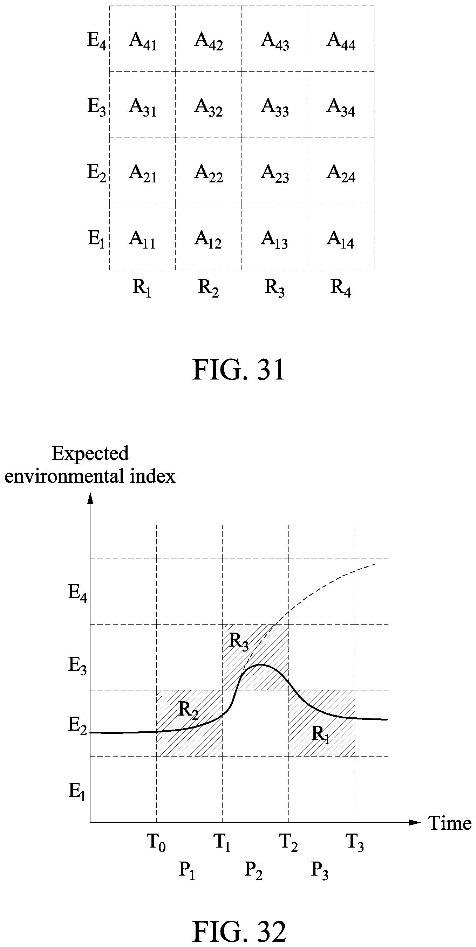

Meanwhile, the control server 72 may additionally use the urgency level when selecting the response measure. In other words, the control server 72 may select the response measure per unit time by comprehensively using the environmental grade and emergency level by each unit time. In the database, the response measure according to a combination of the environmental grade and the urgency level may be stored in a matrix form. FIG. 31 is a response measure matrix according to a combination of an environmental grade and an urgency level, according to an embodiment. Referring to FIG. 31, when the environmental grade is E1, and the urgency level is R1, A11 may be matched as a response measure, and, when the environmental grade is E1, and the urgency level is R2, A12 may be matched as the response measure. Such matrices may be individually set for each type of an event. As such, by using a matrix according to a combination of the environmental grade and the urgency level, more precise and complex response measures may be selected compared to the selection of a response measure only by using the environmental grade. For example, even when the environmental grade is very bad as E4, different response measures may be selected for the urgency level R1, at which the urgency is low, and the urgency level R4, at which the urgency is very high. For example, in the case of FIG. 29, since the environmental grade at the unit time P1 is E2, and the urgency level is R2, a response measure A22, which matches the environmental grade being E2 and the urgency level being R2 from a matrix corresponding to the type of an occurring event, may be selected for P1. In addition, since the environmental grade at the unit time P2 of FIG. 29 is E3, and the urgency level is R4, a response measure A34, which matches the environmental grade being E3 and the urgency level being R4 from the matrix corresponding to the type of the occurring event, may be selected for P2.

The control server 72 may reflect feedback according to a response measure when the response measure is applied. The control server 72 may regenerate an expected environmental index over time from when the response measure is applied. In other words, the control server 72 may quantify the influence of the selected response measure and an event situation at the time and may regenerate the expected environmental index over time. The control server 72, by using the regenerated expected environmental index, may update the environmental grade by each unit time, the urgency level by each unit time, and the response measure by each unit time in the same method as described above.

FIG. 32 is a graph illustrating the regenerating of the expected environmental index of FIG. 29 according to the application of a response measure. Specifically, FIG. 32 is a graph illustrating the regeneration of the expected environmental index from the time T1, assuming that the response measure is applied at the time T1 in the situation of FIG. 29. Referring to FIG. 29, a matching response measure as the environmental grade being E3 at the unit time P2 is A34 before the response measure. However, referring to FIG. 32, as the response measure is applied at the time T1, the urgency grade of the environmental grade being E3 at the unit time P2 changes to R3, and a matching response measure thereof may be A33. That is, the control server may reflect the feedback of the response measures and may update the environmental grade, urgency level, and the response measure at P2 to E3, R3, and A33, respectively. Likewise, the control server may update the environmental grade, urgency level, and response measure at P3 to E2, R1, and A31, respectively. For example, when the response measure is applied again at T2, the control server 72 may feed the response measure back again from the time T2 to repeatedly regenerate the expected environmental index and may update the environmental grade, the urgency level, and the response measure. According to this configuration, by reflecting event occurrence and a response measure in response thereto moment by moment, an optimal response measure may be determined every time, and ultimately, the event occurrence may be effectively responded.

Hereinafter, an interactive environment management method is described. However, when describing the interactive environment management method, the detailed description is omitted regarding the overlapping description of the interactive environment management system provided above.

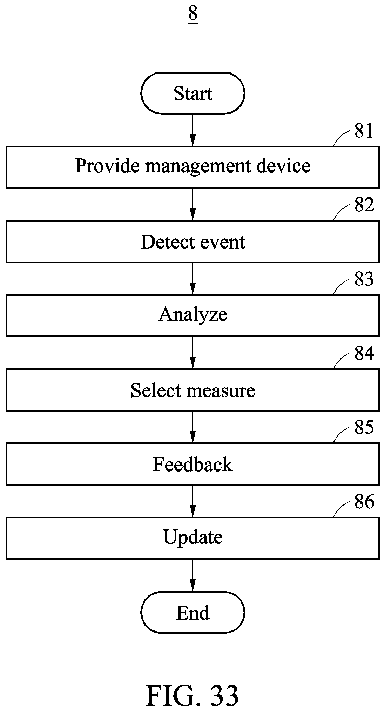

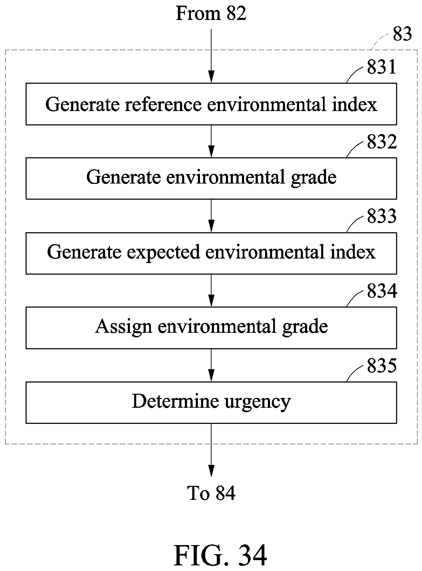

FIG. 33 is a flowchart of the interactive environment management method according to an embodiment. FIG. 34 is a flowchart illustrating an analysis operation according to an embodiment.

Referring to FIG. 33, an interactive environment management method 8, according to an embodiment, may be a method of managing the environment of a target space by detecting an environmental change event occurring around the target space including a management device, quantifying and analyzing an impact of the occurring event on the target space, selecting a necessary response measure according to an analyzed result, and actively and preemptively responding to the event occurrence by providing the selected response measure to the management device, a user, or a manager.

The interactive environment management method 8, according to an embodiment, may include management device provision operation 81, event detection operation 82, analysis operation 83, measure selection operation 84, feedback operation 85, and update operation 86.

The management device provision operation 81 may be an operation of providing at least one management device that is included in a target space and manages the environment of the target space. The management device may include a management device of various fields. For example, the management device may include a management device of at least one field among a pest control field, an air quality field, a water quality field, and a hygiene field.

The event detection operation 82 be an operation of detecting the environmental change event occurring around the target space. For example, the event detection operation may be the receiving of information on an environmental change from the management device installed in the target space, the receiving of information on an event occurring for the target space from an external server, or the detecting of an environmental change event through a separate detector installed in a region adjacent to the target space.

The analysis operation 83 may be an operation of quantifying and analyzing an impact of an event on the target space. Specifically, referring to FIG. 34, the analysis operation 83 may include reference environmental index generation operation 831, environmental grade generation operation 832, expected environmental index generation operation 833, environmental grade assignment operation 834, and urgency determination operation 835.

The reference environmental index generation operation 831 may be an operation of generating at least one reference environmental index that serves as a basis for an environmental condition of the target space. The reference environmental index may be differently set depending on the target space by using the characteristics of the target space. The control server may generate at least one reference environmental index by using the environmental information of the target space or the personal information of the user who stays in the target space when generating the reference environmental index.

The environmental grade generation operation 832 may be the generating of at least 23 or more environmental grades having the at least one reference environmental index as a numerical boundary.

The expected environmental index generation operation 833 may be an operation of generating the expected environmental index of the target space according to the event occurrence. The expected environmental index may be generated as a value that changes over time. In other words, the expected environmental index may be a type of a function having time as a variable. The expected environmental index generation operation 833 may be the generating of the expected environmental index according to time by using at least any one of the type, scale, and occurrence time of an event and a distance between an occurrence point of the event and the target space.

The environmental grade assignment operation 834 may be an operation of dividing the expected environmental index by each unit time and assigning an environmental grade by each unit time by determining the environmental grade corresponding to the expected environmental index by each unit time. For example, the control server may assign the environmental grade based on an average value of the expected environmental index during a unit time. Alternatively, the control server may assign the environmental grade based on the maximum, minimum, or median value of the expected environmental index during the unit time.

The urgency determination operation 835 may be an operation of calculating a gradient of the expected environmental index by each unit time and determining urgency by each unit time according to the size of the gradient. Specifically, the urgency determination operation 835 may assign an urgency level by each unit time according to the size of the gradient. The control server may calculate the gradient of the expected environmental index based on the gradient of the median value of the unit time. The control server may calculate the gradient of the expected environmental index based on the gradient of a straight line connecting both end values of the unit time. The control server may assign an urgency level matching according to the size of the gradient by each unit time.

The measure selection operation 84 may be a measure selection operation for selecting a necessary response measure. Specifically, the measure selection operation 84 may be an operation of selecting the necessary response measure by comparing the reference environmental index with the expected environmental index. The necessary response measure may include at least one of environment management through a management device, the provision of a management service required for the target space, or the provision, to the user, of an action guideline required to be performed. This selection of a response measure may be performed per unit time. The control server may include a database in which a plurality of response measures is listed and stored for each environmental grade. In the database, feasible response measures may be listed and stored by each type of an event. The control server may select a response measure by each unit time, matching each environmental grade by each unit time, by using the type of an event from the database.

Meanwhile, the measure selection operation 84 may select a response measure by each unit time from the database by comprehensively using the type of the event, an environmental grade by each unit time, and an urgency level by each unit time. In the database, the response measure according to a combination of the environmental grade and the urgency level may be stored in a matrix form. The control server may select a matching response measure from the matrix corresponding to the event according to a combination of the environmental grade by each unit time and the urgency level by each unit time.

The feedback operation 85 may be an operation of resetting the expected environmental index by reflecting feedback according to a response measure when the response measure is applied. The control server may regenerate an expected environmental index over time from when the response measure is applied. In other words, the control server may quantify the influence of the selected response measure and an event situation at the time and may regenerate the expected environmental index over time.

The update operation 86 may be an operation of updating, by using the regenerated expected environmental index, the environmental grade by each unit time, the urgency level by each unit time, and the response measure by each unit time. If the response measure is repeatedly applied, the response measure may be fed back again to repeatedly regenerate the expected environmental index, and the environmental grade, the urgency level, and the response measure may each be updated. According to this method, by reflecting event occurrence and a response measure in response thereto moment by moment, an optimal response measure may be determined every time, and ultimately, the event occurrence may be effectively responded.

A number of example embodiments have been described above. Nevertheless, it should be understood that various modifications may be made to these example embodiments. For example, suitable results may be achieved if the described techniques are performed in a different order and/or if components in a described system, architecture, device, or circuit are combined in a different manner and/or replaced or supplemented by other components or their equivalents.

## Claims

1. An interactive system comprising:
at least one management device comprised in a target space and
configured to collect environmental information of the target space; and
a control server configured to generate analysis information on an environment by analyzing the environmental information and select at least one piece of service information matching the analysis information.

2. The interactive system of claim 1, wherein
the control server is configured to divide the target space into one or more control areas and generate a position index by assigning a position weight according to the one or more control areas, wherein the position weight is determined by comprising at least one of the use, area, and congestion of the one or more control areas and the size and position of an opening.

3. The interactive system of claim 1, wherein
the control server is configured to further receive device information of the management device and generate the analysis information by comprising a device index generated by indexing the device information, wherein
the device information comprises at least one of the specification information, component information, consumable information, battery information, software version information, inspection information, sensor information, and memory information of the management device, and
the control server is configured to generate the device index by assigning a device weight determined by comprising at least any one of the use period, replacement history, and price of the management device.

4. The interactive system of claim 1, wherein
the control server is configured to further receive user information of a user who uses the management device and generate the analysis information by comprising a user index generated by indexing the user information.

5. The interactive system of claim 1, wherein
the control server is configured to standardize pieces of environmental information into one environmental index and generate the analysis information by using the standardized environmental index, and the control server is configured to further receive the position information, device information, and user information of the one or more management devices and generate the analysis information by comprising a composite index generated by indexing the environment information, the position information, the device information, and the user information.

6. An interactive system comprising:
at least one management device comprised in a target space and configured to manage an environment of the target space; and
a control server configured to generate propensity information of a user by analyzing operation information of the management device and select at least one piece of customized information according to the propensity information, wherein
the control server is configured to provide the customized information to the user or a manager,
the operation information comprises at least any one of the operation function, operating time, operating period, operation frequency, and operation pattern of the management device, and
the control server is configured to collect the operation information of each function of the management device and generate a function interest index by using the operation information.

7. The interactive system of claim 6, wherein
the control server is configured to group the management device into at least one field, collect the device interest index of each field, and generate a field interest index by assigning a device weight to the device interest index, and
the control server is configured to compare the field interest index of each field and select more pieces of customized information as a field having a higher field interest index.

8. The interactive system of claim 6, wherein
the control server is configured to group the management device into at least one field, collect the device interest index of each field, and generate a field interest index by assigning a device weight to the device interest index, and
the control server is configured to select information on a product corresponding to a field having the highest field interest index as the customized information.

9. The interactive system of claim 6, wherein
the control server is configured to group the management device into at least one field, collect the device interest index of each field, and generate a field interest index by assigning a device weight to the device interest index, and
the control server is configured to set the field having the highest field interest index as a main field of interest and a field having the second-highest field interest index as a secondary field of interest and select information on a product corresponding to the main field of interest or the secondary field of interest as the customized information.

10. The interactive system of claim 6, wherein
the control server is configured to select information on a product having a function having the highest function interest index as the customized information, or
the control server is configured to set the function having the highest function interest index as a main function of interest and a function having the second-highest function interest index as a secondary function of interest and select information on a product having the main function of interest or the secondary function of interest as the customized information.

11. An interactive management system comprising:
a management device comprised in a target zone and configured to manage an environment of the target zone;
a control server configured to collect information through the management device and select a management service required for the target zone based on the collected information; and
a manager device configured to receive an operation instruction for the selected management service, wherein
the control server comprises:
a data collector configured to collect information related to the environment of the target zone;
an analyzer configured to analyze an environmental condition of the target zone through the collected information;
a management unit configured to set a database on a management service and select a management service matching an analysis result of the analyzer; and
a communicator configured to transmit information on the selected management service to the manager device.

12. The interactive management system of claim 11, wherein
the analyzer is configured to
classify the collected information into a plurality of factors and generate an analysis result on the environmental condition of the target zone through a combination of the classified factors, generate an individual indicator by applying an individual weight to each factor, and
generate the analysis result by extracting some factors of the plurality of factors based on the individual indicator, and
the management unit is configured to define a management service corresponding to an individual indicator of each of the plurality of factors in a matrix and select a matching management service from the matrix by combining individual indicators of the extracted factors.

13. The interactive management system of claim 11, wherein
the analyzer is configured to evaluate the environmental condition of the target zone as a quantified environmental index and select the management service based on the environmental index, and
the analyzer is configured to divide a numerical range of the environmental index into a plurality of environmental grades according to the characteristics of the target zone and determine an environmental grade of the target zone through the collected information.

14. The interactive management system of claim 11, wherein
the analyzer is configured to evaluate the environmental condition of the target zone as a quantified environmental index and select the management service based on the environmental index, and
the control server is configured to collect geofence information by setting an area range based on the target zone as a geofence and select a management service for the target zone by reflecting the geofence information.

15. The interactive management system of claim 11, wherein
the analyzer is configured to evaluate the environmental condition of the target zone as a quantified environmental index and select the management service based on the environmental index, and
the analyzer is configured to, when the management service is performed on the target zone, reevaluate an environmental index of the target zone through feedback according to a performance result.

16. An interactive environment management system comprising:
at least one management device comprised in a target space and configured to manage an environment of the target space; and
a control server configured to, when an event of an environmental change occurs around the target space, quantify and analyze an impact of the event on the target space and select a necessary response measure.

17. The interactive environment management system of claim 16, wherein
the control server is configured to
generate at least one reference environmental index that serves as a basis for an environmental condition of the target space,
generate an expected environmental index of the target space according to the occurrence of the event, and
select the necessary response measure by comparing the at least one reference environmental index and the expected environmental index, the control server is configured to generate at least two or more environmental grades having the at least one reference environmental index as a numerical boundary,
the control server is configured to generate an expected environmental index according to a time by using at least any one of the type, scale, and occurrence time of the event and a distance between an occurrence point of the event and the target space,
the control server is configured to divide the expected environmental index by each unit time and assign an environmental grade by each unit time by determining the environmental grade corresponding to the expected environmental index by each unit time, and
the control server is configured to calculate a gradient of the expected environmental index by each unit time and determine an urgency by each unit time according to the size of the gradient.

18. The interactive environment management system of claim 17, wherein
the urgency is evaluated with a plurality of urgency levels, and
the control server is configured to assign an urgency level by each unit time, matching according to the size of the gradient by each unit time, and
the control server is configured to, when selecting the necessary response measure, select a response measure by each unit time by using the type of the event, an environmental grade by each unit time, and an urgency level by each unit time.

19. The interactive environment management system of claim 18, wherein
the control server comprises a database where a response measure according to a combination of the environmental grade and the urgency level in a matrix, wherein
the matrix is comprised by each type of the event.

20. The interactive environment management system of claim 19, wherein
the control server is configured to select a matching response measure from the matrix corresponding to the event according to a combination of the environmental grade by each unit time and the urgency level by each unit time,
the control server is configured to, when the response measure is applied, regenerate an expected environmental index according to a time after the response measure is applied by reflecting feedback according to the response measure, and
the control server is configured to, by using the regenerated expected environmental index, update the environmental grade by each unit time, the urgency level by each unit time, and the response measure by each unit time.
